(19) Europäisches Patentamt
European Patent Office
Office européen des brevets

(11) EP 1 030 300 A2

(12) **EUROPEAN PATENT APPLICATION**

(43) Date of publication:
**23.08.2000 Bulletin 2000/34**

(21) Application number: **00300478.5**

(22) Date of filing: **21.01.2000**

(51) Int. Cl.⁷: **G11B 15/467**, G11B 5/008

(84) Designated Contracting States:
**AT BE CH CY DE DK ES FI FR GB GR IE IT LI LU MC NL PT SE**
Designated Extension States:
**AL LT LV MK RO SI**

(30) Priority: **16.02.1999 JP 3680699**

(71) Applicant: **HITACHI, LTD.**
**Chiyoda-ku, Tokyo (JP)**

(72) Inventors:
- **Amada, Nobutaka**
  **Yokohama-shi, Kanagawa (JP)**
- **Okamoto, Hiroo**
  **Yokohama-shi, Kanagawa (JP)**
- **Nishijima, Hideo**
  **Hitachinaka-shi, Ibaraki (JP)**

(74) Representative:
**Hackney, Nigel John et al**
**Mewburn Ellis,**
**York House,**
**23 Kingsway**
**London WC2B 6HP (GB)**

# (54) Magnetic recording and reproducing apparatus

(57) A magnetic recording and/or reproducing apparatus for recording and reproducing digital signals for long periods of time and high rate recording and reproduction, achieving a plurality of record/reproducing modes and further maintaining compatibility between apparatus with different head configurations wherein it comprises a digital recording means for recording digital signals on a helical track on magnetic tape utilizing a plurality of magnetic heads hailing a positive or a negative azimuth and arranged on a rotating drum, and a tracking control pulse record means to synchronize with the rotation period of a rotating drum and record a tracking control pulse CTL on the linear track on a magnetic tape, and a servo means to rotate the rotating drum at a specified speed and drive the magnetic tape at a rotation speed 1/K of the drive speed, and wherein the digital recording means records each K rotations of the rotating drum on two tracks, comprised of a first track having a positive azimuth angle and a second track having a negative azimuth angle, and the tracking control pulse record means records a CTL tracking control pulse signal at the point where a specified time has elapsed since recording in the valid region of the second track by the specified magnetic head having a negative azimuth angle as well as the point at each rotation of the rotating drum equivalent to that specified time.

F I G.1

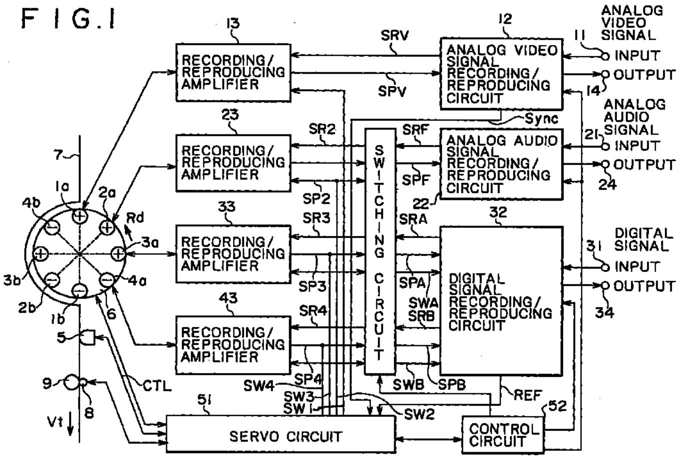


EP 1 030 300 A2

Printed by Xerox (UK) Business Services
2.16.7 (HRS)/3.6

## Description

This invention relates to an apparatus to record and reproduce digital signals on magnetic tape by utilizing a rotating head and relates in particular to a magnetic recording / reproducing apparatus having a plurality of record/reproduction modes according to the transmission rates of the digital signals.

The applicant has previously proposed in Japanese Patent Application No. 6-317947 (Japanese Patent Laid-open Publication No. Hei 8-180580) a magnetic recording / reproducing apparatus having a plurality of record/playback modes according to the transmission rates of the digital signals and compatible with a conventional analog recording VTR.

This magnetic recording / reproducing apparatus records and reproduces digital signals in standard mode using a first and a second magnetic head positioned to face each other at 180 degrees, and in long-time record/reproducing mode performs record/reproduction by utilizing a first magnetic head and third magnetic head placed in proximity to the first magnetic head, and in high transmission rate mode performs record/reproduction of high definition video (HDTV) signals by using a second and third magnetic heads as well as a fourth and a fifth magnetic head positioned to face each other at 180 degrees.

However, the above proposed apparatus of the conventional art gave no consideration whatsoever to obtaining compatibility between different head configurations. Namely, specifying the positions of CTL (control) pulses recorded on magnetic tape for tracking during reproduction (playback) is necessary in order to obtain compatibility between different apparatus, however no consideration whatsoever was given to this point in the apparatus of the conventional art.

Preferably, the object of this invention is therefore to provide a magnetic recording apparatus and a magnetic reproducing apparatus having a plurality of record/playback modes for recording and reproducing digital signals for long periods of time and at high recording and reproduction rates, and further maintaining compatibility between apparatus with different head configurations.

In a first aspect, this invention comprises a digital recording means for recording digital signals on a helical track on magnetic tape utilizing a plurality of magnetic heads having a positive or a negative azimuth and respectively arranged on a rotating drum, and a tracking control pulse record means to record a tracking control pulse CTL synchronously with the rotation period of a rotating drum on the linear track on a magnetic tape, and a servo means to rotate the rotating drum at a specified speed and drive the magnetic tape at a rotation speed 1/K of the drive speed (drive speed in standard (STD) mode), wherein the digital recording means records per each K rotations of the rotating drum on two tracks, comprised of a first track having a positive azimuth angle and a second track having a negative azimuth angle, and the tracking control pulse record means records a CTL tracking control pulse signal at the point where a specified time has elapsed since recording in the valid region of the second track by the specified magnetic head having a negative azimuth angle as well as the point at each rotation of the rotating drum corresponding to that specified time.

The digital signal recorded on the helical track of the magnetic tape and the tracking control pulse recorded on the linear track are thus established at a physical position so that compatibility can be maintained even between apparatus having different head configurations.

Brief Description of the Drawings

Figure 1 is a block diagram of an embodiment of the magnetic recording / reproducing apparatus of this invention.

Figure 2 is a drawing showing the content of digital signal for recording on one track.

Figure 3 is a drawing showing the block configuration of the data record area.

Figure 4 is a drawing showing the data configuration of one track in the data record region.

Figure 5 is a timing chart during record in the standard mode of the digital signal.

Figure 6 is a pattern of the recording track in the standard mode on the magnetic tape.

Figure 7 is a timing diagram during record in the high rate mode on the magnetic tape.

Figure 8 is a drawing showing the recording track pattern in the high rate mode on the magnetic tape.

Figure 9 is a timing diagram during recording of the digital signal in 2X long-time mode.

Figure 10 is a drawing showing the recording track pattern on the magnetic tape in 2X long-time mode.

Figure 11 is a timing diagram during reproduction of the digital signal in 2X long-time mode.

Figure 12 is a timing diagram during reproduction of the digital signal in 3X long-time mode.

Figure 13 is a pattern of the recording track on the magnetic tape in 3X long-time mode.

Figure 14 is a timing diagram during reproduction of the digital signal in 3X long-time mode.

Figure 15 is a schematic showing a typical switching circuit.

Figure 16 is a block diagram showing the digital record/reproduction circuit.

Figure 17 is a drawing showing a typical head placement.

Figure 18 is a drawing showing the head step difference.

Figure 19 is a drawing showing another head placement.

Figure 20 is a drawing showing another head step difference.

Figure 21 is a timing diagram during recording of the digital signal showing in 2X long-time mode.

Figure 22 is a timing diagram during reproduction of the digital signal showing in 2X long-time mode.

Figure 23 is a drawing showing another head placement.

Figure 24 is a drawing showing another head step difference.

Figure 25 is timing diagrams during recording of the digital signal in standard, 2X and 3X long-time mode.

Figure 26 is a timing diagram during reproduction of the digital signal in 2X long-time mode.

Detailed Description of Preferred Embodiments

Hereafter, the embodiments of this invention are described while referring to the accompanying drawings.

Figure 1 is a block diagram of an embodiment of the magnetic recording / reproducing apparatus of this invention. The figure shows a magnetic recording / reproducing apparatus of the present invention but is also the same for autonomous record apparatus and reproduction apparatus. In Fig. 1, the reference numerals 1a and 1b denote analog video signal magnetic record/reproducing heads, 2a and 2b are analog audio signal and digital signal magnetic record/reproducing heads, 3a, 3b, 4a and 4b are exclusively for digital signal magnetic record/reproducing heads, 5 is a tracking control pulse magnetic record/reproducing head, 6 is a rotating drum, 7 is a magnetic tape, 8 is a capstan to control the driving of the magnetic tape 7, 9 is the pinch roller, 13 is the recording / reproducing amplifier for recording and reproducing with the magnetic heads 1a and 1b, 23 is the record/reproducing amplifier for recording and reproducing with the magnetic heads 2a and 2b, 33 is the record/reproducing amplifier for recording and reproducing with the magnetic heads 3a and 3b, 43 is the record/reproducing amplifier for recording and reproducing with the magnetic heads 4a and 4b, 12 is an analog video signal recording / reproducing circuit for recording / reproducing video signals, 22 is an analog audio signal recording / reproducing circuit for recording / reproducing audio signals, 32 is a digital signal recording / reproducing circuit for recording/ reproducing digital signals, 51 is the servo circuit for controlling the rotating drum 6 and the capstan 8, 52 is a control circuit for controlling the operating mode of the recording / reproducing apparatus, and 60 is a switching circuit for switching the recording / reproducing signals.

The operation during normal analog signal recording / reproducing is described next.

During analog signal recording / reproducing, an analog video signal input from an input terminal 11 and an analog audio signal input from an input terminal 21 are respectively converted into the record signals SRV, SRF by an analog video signal recording / reproducing circuit 12 and an analog audio signal recording / reproducing circuit 22. Then the analog video signal is amplified to the specified level by means of the recording / reproducing amplifier 13, input to the magnetic heads 1a and 1b, and recorded onto the magnetic tape 7. The analog audio signal is input to the recording / reproducing amplifier 23 by way of the switching circuit 60, amplified to the specified level, and recorded onto the magnetic tape 7 by the magnetic heads 2a and 2b. A servo circuit 51 at this time, controls the speed of the rotating drum 6 so as to synchronize the rotating drum 6 with the vertical synchronizing signal (SYNCH) of the video signal output from the analog video signal recording / reproducing circuit 12. The tracking control pulse CTL is recorded by the magnetic head 5, one time for each rotation of the rotating drum 6, at a specified timing onto the magnetic tape 7.

During reproducing of the analog signal, in the servo circuit 51, the capstan 8 is controlled by the tracking control pulse CTL or the reproducing signals SPV or SPF to achieve optimum tracking. The analog audio signal reproduced by the magnetic heads 2a, 2b and the analog video signal reproduced by the magnetic heads 1a, 1b are respectively amplified by the recording / reproducing amplifiers 13 and 23 and then input to the analog video signal recording / reproducing circuit 12 and the analog audio signal recording / reproducing circuit 22, the specified processing is performed and the amplified signals output from the output terminals 14 and 24.

In the long-time analog signal recording / reproducing mode, the drive speed of the magnetic tape 7 becomes slow. In other words, only the track pitch becomes narrower and the recording / reproducing operation is the same as during normal recording / reproducing. The drive speed of the magnetic tape 7 in long-time recording / reproducing mode is set for instance at 1/3rd the normal speed. The video signal is recorded and reproduced utilizing the long-time recording / reproducing mode magnetic head (not shown in drawing) placed in close proximity to the respective magnetic heads 1a and 1b. The track pitch during normal analog signal recording / reproducing is for example 58 $\mu$m. The azimuth angle of the magnetic heads 1a, 1b is for example $\pm 6$ degrees, and the azimuth angle of the magnetic heads 2a and 2b is for example $\pm 30$ degrees.

Hereafter, the operation during digital signal recording / reproducing in this invention is explained.

The operation in standard digital signal recording / reproducing mode (hereafter referred to as STD) is next described.

During recording of the digital signal, the digital signal input from the input terminal 31 is converted into a specified type of recording signal SRA by the digital signal recording / reproducing circuit 32. The recording signal SRA is input to the recording / reproducing amplifier 23 by way of the switching circuit 60, amplified to a specified level and recorded onto a magnetic tape 7 by the magnetic heads 2a, 2b. At this time, the servo circuit 51 controls the rotation of the rotating drum 6 so that the rotation is synchronized with the reference signal REF output from the digital signal recording / reproducing circuit 32. The tracking control pulse CTL is recorded by the magnetic head 5 at each rotation of the rotating drum 6 at a specified timing on the magnetic tape 7.

The rotation speed of the rotating drum 6 at this time is for instance 30 rps, the same as during analog signal recording, and the drive speed of the magnetic tape is set at one-half of the speed during normal analog signal recording. During reproducing of the digital signal, just the same as during reproducing of the analog signal, in the servo circuit 51, the capstan 8 is controlled for optimal tracking by the tracking control pulse CTL or the reproducing signal SPA. The digital signals reproduced by the magnetic heads 2a, 2b are amplified by the recording / reproducing amplifier 23 and then input to the digital signal recording / reproducing circuit 32 by way of the switching circuit 60, specified processes such as error correction are performed and the amplified digital signals then output from the output terminal 34.

In Fig. 1, recording / reproducing of analog audio signals and recording / reproducing of digital signals are performed jointly by the magnetic heads 2a, 2b however this recording / reproducing can of course be performed by other magnetic heads. When using other magnetic heads the azimuth is ±30 degrees.

Typical contents of a digital signal recorded on one track are shown on Fig. 2. In the figure, the reference numeral 103 denotes a sub-code record region for recording a sub-code such as the program information, time information, 107 is a data recording region for recording digital signals, 102 and 106 are preambles of the respective recording regions 103 and 107, 104 and 108 are postambles of the respective recording regions, 105 denotes a gap between the respective recording regions, and 101 and 109 are the margins at the ends of the tracks.

A typical configuration of a block of a data recording region 107 is shown in Fig. 3. In the figure, the reference numeral 111 denotes a synchronization signal, 112 is ID information such as the block address, 113 is the header, 114 is the data, and 115 is the parity (C1 parity) for first error detection/correction. The data recording region is for instance configured of a synchronization signal 111 of 2 bytes, and ID information 112 of 3 bytes, a header 113 of 3 bytes, a data 114 of 96 bytes and a C1 parity 115 of 8 bytes, so that one block is comprised of 112 bytes.

Figure 4 is a drawing showing the data configuration of one track in the data recording region 107. The data recording region 107 is for instance comprised of 336 blocks. The initial 306 blocks are the data 114 and the next 30 blocks are recorded with a second error correction code (C2) parity 116. The C2 parity 116 is for instance, recorded in units of 6 tracks, so that 306 blocks × 6 tracks are divided by 18, and the 10 blocks of C2 parity are added to the respective 102 blocks of data. A Reed-Solomon code can for instance be utilized for an error correction code.

Figure 5 is a timing chart during record in the standard mode of the digital signal. The reference signal REF is output to the servo circuit 51 from the digital signal recording / reproducing circuit 32. The servo circuit 51 controls the rotation of the rotating drum 6 according to the reference signal REF and also supplies a head switching signal SWA (SW2) to the digital signal recording / reproducing circuit 32. In other words, the servo circuit 51 generates a head switching signal SWA (SW2) at a timing suitable for the magnetic heads 2a, 2b to scan the specified position on the magnetic head 7, and synchronizes the head switching signal SWA (SW2) with the reference signal REF. Then, a recording signal SRA is output from the digital signal recording / reproducing circuit 32 based on the head switching signal SWA (SW2), and is recorded on a specified position of the magnetic tape 7 by the magnetic heads 2a, 2b. The timing chart shown in Fig. 5, shows the reference signal REF output at the beginning of the plus (+) azimuth track however, the output timing for the reference signal can of course be output at another position. The reference signal REF need not be output one time for each one rotation of the drum 6, but may for instance be output one time for each one/half rotation. The servo circuit 51 supplies the tracking control pulse CTL to the magnetic head 5 at a specific timing of one time for one rotation of the rotating drum 6 and records the tracking control pulse CTL on the magnetic tape 7 in order to allow tracking during reproducing. An arrow ↑ in Fig. 5, indicates the rising edge of the tracking control pulse CTL.

Figure 6 is a pattern of the recording track in the standard mode on the magnetic tape 7 at this time. In the figure, the reference numeral 73a denotes the plus (+) azimuth track, 73b is the minus (-) azimuth track, 75 is the recording track for the tracking control pulse CTL and 76 is the rising edge (Section in Fig. 5 shown by the arrow ↑ .) of the tracking control pulse CTL. The tracking pitch Tp is for instance 29 μm.

This invention is characterized here by the record timing of the tracking control pulse CTL. In other words, as shown in Fig. 5, the record timing of the rising edge (shown by the arrow ↑ ) of the tracking control pulse CTL, is set to a specified time (ΔT) after recording has ended by means of the - minus azimuth magnetic head 2b, for instance at a point after approximately 0.6 ms has elapsed since the point where the recording ended, and this time is not only the same as the STD mode, but also the same as other recording / reproducing modes related later on. By this contrivance, the physical position of the rising edge of the tracking control pulse CTL and the digital signal recording track of the magnetic tape 7 are determined by the distance shown for example by the X value in Fig. 6 regardless of the relative head placement and recording / reproducing mode so that reproducing can be achieved even with different head configurations and compatibility can be maintained.

The method for achieving the above result is described in detail next.

Figure 7 is a timing diagram during record in the high rate mode (called HS mode) corresponding to a high definition video (HDTV) signal on the magnetic tape. In this HS mode, the number of rotations of the rotating drum 6 is set to the same figure as the previously mentioned STD mode, and only the drive speed of the magnetic tape 7 is set to twice that of STD mode, and recording on two channels is performed utilizing the magnetic heads 3a, 3b, 4a, and 4b. By this contrivance, the rate at which the digital signal is recorded can be set to twice the STD mode, and the track pitch Tp as well as the recording frequency can be set to same as the STD mode.

In Fig. 7, the reference signal REF is the same as the STD mode in Fig. 5. The servo circuit 51 not only controls the rotation of the rotating drum 6 based on this reference signal REF but also outputs the head switching signals SWA (SW3) and SWB (SW4) synchronized with the rotation of the rotating drum 6, to the digital signal recording / reproducing circuit 32. At this time, the servo circuit 51 generates the head switching signals SWA (SW3) and SWB (SW4) at a timing to allow the magnetic heads 3a, 3b and the magnetic heads 4a, 4b to respectively scan the specified positions on the magnetic tape 7, and synchronizes these head switching signals SWA (SW3) and SWB (SW4) with the reference signal REF. The record signals SRA and SRB are then output from the digital signal recording / reproducing circuit 32 based on the head switching signals SWA (SW3) and SWB (SW4). The record signal SRA is input to the recording / reproducing amplifier 33 by way of the switching circuit 53, amplified to a specified level and recorded onto a specified position on the magnetic tape 7 by the magnetic heads 3a, 3b. In the same way, the recording signal SRB is input to the recording / reproducing amplifier 43 by way of the switching circuit 53, amplified to a specified level and recorded onto a specified portion of the magnetic tape 7 by the magnetic heads 4a, 4b. The servo circuit 51 then outputs a tracking control pulse CTL to the magnetic head 5 at a timing the same as the previously mentioned timing, one time for each one rotation of the rotating drum 6, and records the tracking control pulse CTL on the magnetic tape 7. In other words, the recording timing of the rising edge (shown by the arrow ↑) of the tracking control pulse CTL, is set by means of the minus (-) azimuth magnetic head 4b to a specified time ($\Delta T$) that has elapsed after recording ended.

Figure 8 is a drawing showing the recording pattern on the magnetic tape 7 at this time. The above record timing thus causes the X value shown in the figure to largely equal the value during STD mode, allowing compatibility to be maintained during reproduction. Here, by correcting the $\Delta$ T in HS mode, according to the difference in drive speed of the magnetic tape 7 from $\Delta T$ in the STD mode of Fig. 5, the X value shown in the figure can be set to the same value as during STD mode.

The tracking control pulse CTL is recorded one time for each one rotation of the rotating drum 6 so that four tracks are recorded at one time, however the number of recording pulses per the drive time of the magnetic tape 7 is the same as in STD mode so that control of the drive of the magnetic tape 7 during reproducing can be made the same as in STD mode. The azimuth angle of the magnetic heads 3a, 3b, 4a and 4b of course are set for instance to $\pm 30$ degrees the same as for the magnetic heads 2a, 2b using STD mode.

During reproduction in HS mode, the same as during reproducing in STD mode, the capstan 8 is controlled by the servo 51 to optimize the tracking by means of the tracking control pulse CTL or the reproducing signal SPA or the SPB level. The digital signals reproduced with the magnetic heads 3a, 3b, 4a and 4b, after being amplified by the recording / reproducing amplifiers 33 and 34, are input to the digital signal recording / reproducing circuit 32 by way of the switching circuit 60, the specified error correction processing performed and then output from the output terminal 34.

Tracking may be performed so that the sum of the SPA and SPB 2-channel reproducing signals is at a maximum. Tracking can thus be optimized on two-channel tracks from which the signals are simultaneously reproduced. Tracking can also be performed so that the reproduction level for each respective channel reaches at least a fixed level.

Next, the operation for long-time recording / reproducing of digital signals is described.

In long-time recording / reproducing of digital signals, the rotating speed (rpm) of the rotating drum is set the same as in STD mode and only the drive speed of the magnetic tape 7 is set slower to change the recording timing.

Figure 9 is a timing chart showing the record timing in 2× long-time recording / reproducing mode (hereafter referred to as LS2 mode) in which the drive speed of the magnetic tape 7 is set to 1/2 that of STD mode. The reference signal REF is the same as the STD mode in Fig. 5. Besides controlling the rotation of the rotating drum 6 based on this reference signal REF, the servo circuit 51 outputs the head switching signals SWA (SW2) and SWB (SW3) synchronized with the rotation of the rotating drum 6, to the digital signal recording / reproducing circuit 32. At this time, the servo circuit 51 generates the head switching signals SWA (SW2) and SWB (SW3) at a timing to allow the magnetic heads 2a, 2b and the magnetic heads 3a, 3b to respectively scan the specified positions on the magnetic tape 7, and synchronizes these head switching signals SWA (SW3) and SWB (SW4) with the reference signal REF.

The recording control signals ERA and ERB indicating the recording signals SRA, SRB and their effective region based on the head switching signals SWA and SWB are output from the digital signal recording / reproducing circuit 32. The record signal SRA is input to the recording / reproducing amplifier 23 by way of the switching circuit 60, amplified to a specified level and recorded onto a specified position on the magnetic tape 7 only by the magnetic head 2b. In the same way, the recording signal SRB is input to the recording / reproducing amplifier 33 by way of the switching circuit 60, amplified to a specified level and recorded onto a specified portion of the magnetic tape 7 only by the magnetic head 3b. The recording / reproducing amplifier 23, 33 may be set in constant recording mode and for instance, when performing after-recording (latter recording) of the sub-code region, control of the recording / reproducing mode may be performed by means of the record control signals ERA, ERB.

The recording signals SRA and SRB as shown in the figure, are both output one time for each two rotations of the rotating drum 6 and then recorded. In other words, recording is performed at a ratio of two tracks for each two rotations of the rotating drum 6. The digital signal rate that can be recorded becomes half that of the STD mode but the track pitch Tp and the recording frequency can be set to the same as the STD mode.

The tracking control pulse CTL is the same period as the STD mode of Fig. 5 and the HS mode of Fig. 7, in other words a ratio of one time for each rotation of the rotating drum 6. The record timing of this tracking control pulse CTL is also the same as the STD mode and HS mode. The timing for the rising edge of the tracking control pulse CTL (shown by the arrow ↑ ), is set to a specified time (ΔT) that has elapsed after recording has ended by means of the minus (-) azimuth magnetic head 2b.

In this invention, since the recording signals SRA and SRB are both output at a ratio of only one time for each two rotations of the rotating drum 6, the tracking control pulse CTL is also recorded with differing pulse widths TL or TS, once for each two rotations of the rotating drum 6. The timing for changing this record pulse width may for instance be accomplished by adjusting the pulse width TL to match the recording performed by the magnetic head 3b plus (+) azimuth. The tracking will then prove effective during reproducing of the magnetic tape 7 signals. The processing for the tracking during this reproduction is subsequently related in detail. Table 1 shows a typical TL and TS pulse width duty cycle for the tracking control pulse.

TABLE 1

| | Pulse "L" (TL) | Pulse "S" (TS) |
|---|---|---|
| Pulse "0" | 62.5±0.5% | 57.5±0.5% |
| Pulse "1" | 30±0.5% | 25±0.5% |

A recording pattern for the magnetic tape 7 during this LS2 mode is shown in Fig. 10. In this way, by means of this recording timing, the X value shown in the figure becomes largely the same value as during the STD mode and the HS mode, and compatibility is maintained during reproduction. Here also, just as with the time (ΔT) in the HS mode in Fig. 7, by correcting the time (ΔT) in the LS2 mode of Fig. 9 according to the drive speed differential of the magnetic tape 7 from the time (ΔT) in the STD mode of Fig. 5, the X value shown in the figure can be set to the same value as when in STD mode. In other words, the X value can be set to the same value in all modes, by making corrections according to the drive speed differential of the magnetic tape 7 with the time (ΔT) in each mode.

Since the tracking control pulse CTL is recorded one time for each rotation of the rotating drum 6, it appears to be recorded on each track however, the record pulse count with respect to the drive time of the magnetic tape 7 is the same as the STD mode and the HS mode so that during reproducing of digital signals, control of the drive of the magnetic tape 7 can be made the same as for the STD mode and HS mode.

Figure 11 is a timing diagram showing the timing during reproduction of signals in LS2 mode. The reference signal REF and the head switching signals SWA, SWB has the same timing as the reproduction timing of Fig. 9. The servo circuit 51 controls the drive speed of the magnetic tape 7 so that the reproduced tracking control pulses CTL maintain a fixed phase with the reference signal REF and the drive speed of the magnetic tape 7 is consequently the same as during recording. The magnetic heads 2b and 3b at this time, respectively scan each track twice and from among these tracks the head scans accurately only one time. Then, as shown in the figure, reproducing may be performed by generating the reproducing reference signals EPA, EPB for one out of every two tracks to for instance achieve an H level. These reproducing reference signals EPA, EPB then detect the reproduction signals SPA, SPB when these reproducing reference signals EPA, EPB are at H level, and perform tracking so that the sum or either of the two levels is maximized, and this reproducing signal then input to the digital signal recording / reproducing circuit 32 and reproducing processing performed. These reproducing reference signals EPA, EPB can be easily generated by detecting the pulse width of the reproduced tracking control pulse CTL. The reproducing reference signal EPB for instance, may be aligned with the so timing that the plus (+) azimuth of the magnetic head 3b scans the magnetic tape 7 at the rotation of the detected pulse width TL. Also, the reproducing reference signal EPA for instance, may be aligned with the timing that the minus (-) azimuth of the magnetic head 2b scans the magnetic tape 7 at the rotation of the detected pulse width TL. In this way, tracking can be easily performed during reproduction, by changing and recording the pulse width of the tracking control pulse CTL.

Figure 12 is a timing chart showing the recording timing of 3× long-time recording mode (Hereafter called LS3 mode.) in which the drive speed of the magnetic tape 7 is one-third the speed in STD mode. In this case also, the reference signal REF is the same as the STD mode of Fig. 5, and the recording signal SPA is output at a rate of one time for three tracks and recorded on the magnetic tape 7 by means of the magnetic heads 2a and 2b.

In other words, the recording of the two tracks is performed at three rotations of the rotating drum 6. The rate at which the digital signal can be recorded therefore becomes one-third of that of STD mode but the track pitch Tp and the record frequency can be set identical to STD modes.

The tracking control pulse CTL is set at a period identical to the STD mode of Fig. 5, or in other words, recorded at a rate of one time for each one rotation of the rotating drum 6. The record timing of this tracking control pulse CTL is also the same as the STD mode, HS mode and LS2 modes, and the timing for the rising edge of the tracking control pulse CTL (shown by the arrow ↑), is set to a specified time (ΔT) that has elapsed after recording has ended by means of the minus (-) azimuth magnetic head 2b. In the recording pattern on the magnetic tape 7, the X value as shown in Fig. 13, is therefore largely the same as that in the STD mode, HS mode and LS2 mode so that compatibility with different head configurations can be maintained.

Further, since the tracking control pulse CTL is recorded one time per each one rotation of the rotating drum 6, recording is performed at a rate of three times for each two tracks however the number of recording pulses per the drive time of the magnetic tape 7 is the same as in STD mode so that the same drive control of the magnetic tape 7 can be performed during reproduction as is performed in STD mode.

The different pulse widths of the tracking control pulse CTL are recorded at a ratio of one time for three rotations of the rotating drum 6, the same as in LS2 mode. The timing for changing the recording pulse width is obtained by matching the pulse width TL with the rotations at which recording is performed by the plus (+) azimuth of the recording head 2a so that tracking is easily performed during reproduction.

The reproduction timing in the LS3 mode is shown in Fig. 14. The reference signal REF and the head switching signal SWA are the same recording timing as in Fig. 12. During reproduction, the servo circuit 51 controls the drive speed of the magnetic tape 7 so that the tracking control pulse CTL maintains a fixed phase with the reference signal REF so that the drive speed of the magnetic tape 7 is the same as during record. Each of the magnetic heads 2a and 2b makes three scans of each track and the head scans accurately only one time. Then, as shown in the figure, a reproducing reference signal EPA having an H level is for instance generated at a ratio of one for every three tracks, this reproducing reference signal EPA detects the reproducing signal SPA during H level, performs tracking so this level will be a maximum, inputs this reproducing signal into the digital signal recording / reproducing circuit 32 and reproduction processing is then performed. This reproducing reference signal EPA can be easily generated by detecting the pulse width of the tracking control pulse CTL that was reproduced. Using the reproducing reference signal EPA for instance, the timing for scanning the magnetic tape 7 at the rotation where the plus (+) azimuth of the magnetic head 2a detected the pulse width TL, may be matched with the timing that the minus (-) azimuth of the magnetic head 2b scans the magnetic tape 7 at the next rotation. In this way, tracking can easily be performed during reproducing by changing and recording the pulse width of the tracking control pulse CTL, the same as in the LS2 mode.

In a long-time recording / reproducing mode of N times as long as STD mode, (other than 3 times the long-times recording / reproducing mode), a record signal may be recorded or reproduced on or from two tracks, at a ratio of two tracks for each N rotations of the rotating drum 6 during recording/reproducing. In a long-time recording / reproducing mode where N is an odd multiple such as 3 times, recording / reproducing of a signal can be performed utilizing the magnetic heads 2a and 2b, the same as in STD mode.

At this time, the timing of the tracking control pulse CTL for recording at a ratio of one time for one rotation of the rotating drum 6 is of course the point at which the time ΔT has elapsed after recording has ended by the minus (-) azimuth of the recording head at the rising edge of the tracking control pulse CTL, the same as with the other previously related modes. Also, the timing for recording various pulse widths of the tracking control pulse CTL at a ratio of one time for N rotations of the rotating drum 6, can also be set the sane as the LS2 and LS3 modes so that for instance, the rotations for performing recording with the plus (+) azimuth recording head can be matched with the pulse width TL.

Figure 15 is a block diagram of the switching circuit 60. The reference numeral 61 is a switching circuit for switching the analog audio recording signal SRF and the digital recording signal SRA. A control signal DIG that indicates whether the signal is analog or digital, causes an analog signal to be connected to a terminal "a" and a digital signal to be connected to a terminal "b". The reference numeral 62 is a switching circuit to switch the digital recording signals SRA, SRB, the reference numeral 64 is a switching circuit to switch the head switching signals SWA, SWB. The switching circuits 62 and 64 are both controlled by the digital mode control signal MODE. In other words, terminal "a" is connected in the case of STD mode, LS2 mode and LS3 mode, while terminal "b" is connected in the case of HS mode. The relations of the magnetic head used in each mode and the recording / reproducing signals can therefore be set as described above by means of this configuration.

The switching circuit 61 is not required in cases where the magnetic heads 2a and 2b are exclusively for recording / reproducing digital signal and separate heads are installed for recording / reproducing analog signals. The switch 62 can easily be incorporated and integrated into the digital signal recording / reproducing circuit 32, and the switching circuit 64 can easily be incorporated and integrated into the servo circuit 51.

The switching circuit 63 is for analog signal switching however the switching circuit 63 can also be incorporated and integrated into the digital signal recording / reproducing circuit 32.

Figure 16 is a block diagram of the digital signal recording / reproducing circuit 32. Here, the reference numerals 301, 304 are interface circuits, 302 is a recording / reproducing circuit, 303 is a timing generator circuit, 311 and 312 are modulator circuits, 321 and 322 are A/D converter circuits, 331 and 332 are clock recovery circuits, 341 and 342 are equalizer circuits and 351 and 352 are Viterbi decoder circuits.

During recording in the LS3 mode and the STD mode, a digital signal input from the input terminal 31 is input to the recording / reproducing circuit 302 from the input terminal 301. In the recording / reproducing circuit 302, processing is performed to add an error correction code, modulation performed in the modulator circuit 311 and a recording signal SRA generated at the timing shown in Fig. 5 or Fig. 12. The output from the modulator circuit 312 is stopped at this time. During reproduction, analog/digital conversion is performed in the A/D converter circuit 321 on the reproducing signal SPA that was input, equalization performed in the equalizer circuit 341, Viterbi decoding performed in the Viterbi decoder circuit 351 and the signal then input to the recording / reproducing circuit 302. In the clock recovery circuit 331, a clock is reproduced in synchronization with the bit period of the recorded digital signal. The clock output from the clock recovery circuit 332 is stopped, and the operation of the A/D converter circuit 322, the equalizer 342 and the Viterbi decoder 352 are also stopped. Error correction processing is performed in the recording / reproducing circuit 302 and then supplied to the output terminal 34 by way of the interface circuit 304.

Next, during recording in the HS mode and LS2 mode, the digital signal input from the input terminal 31 is input to the recording / reproducing circuit 302 by way of the interface circuit 301, processing to add an error correction code is performed the same as for the STD mode and the LS3 mode and after separating the signal into two channels, modulation is performed by the respective modulator circuits 311 and 312, and the recording signals SRA, SRB generated at the timing shown in Fig. 7 or Fig. 9. During reproduction, the reproduction signals SPA and SPB input to the two channels are respectively converted in the A/D converter circuits 321 and 322, equalized in the equalizer circuits 341 and 342, Viterbi-decoded in the Viterbi decoding circuits 351 and 352 and input to the recording / reproducing circuit 302. In the recording / reproducing circuit 302, processing such as error correction processing is performed the same as in the STD mode and the LS3 mode and then supplied to the output terminal 34 by way of the interface circuit 304.

In this way, whatever the mode, only the processing rate is changed in the recording / reproducing circuit 302 and identical processing performed. In other words, the generation or the reproduction of track data of Fig. 2 may be performed in any mode.

The timing generator circuit 303 is supplied with the analog/digital control signal DIG and the digital mode control signal MODE from the control circuit 52, and along with output of the servo reference signal, also generates the overall timing signal for the digital signal recording / reproducing circuit 32.

Figure 17 is a drawing showing a typical head placement corresponding to all of the above described modes.

In this example, the analog video signal magnetic recording / reproducing heads 1a and 1b, the STD mode digital signal magnetic recording / reproducing heads 2a and 2b, and the HS mode digital signal magnetic recording / reproducing heads 3a, 3b, 4a, 4b are respectively placed at spaced 45 degree intervals. The magnetic heads 2b and 3b are used to record/reproduce the LS2 mode digital signal, and the magnetic heads 2a and 2b are used the same as in STD mode, to record/reproduce the LS3 mode digital signal.

Figure 18 is a drawing showing the head the respective head height differentials corresponding to the head placement of Fig. 17. The height differential Hb between the magnetic heads 2b and 3b used for recording / reproducing in the LS2 mode is given as follows with $\phi$ b as the distributed angle differential and Tp as the track pitch. In the formula given below, the Hp = Tp/8 when $\phi$b equals 45 degrees.

$$Hb = (Tp \div 2) \times (\phi b \div 180^\circ) \qquad (1)$$

The height differential Hc between the magnetic heads 3a and 4a, and between the magnetic heads 3b and 4b used during recording / reproducing in the LS2 mode, with $\phi$c as the distributed angle differential, is shown next where $\phi$ c is equal to 45 degrees, so that Hc is equal to Tp/2.

$$Hc = Tp - (2 \times Tp) \times (\phi c \div 180°) \quad (2)$$

If recording is performed at the timing shown in Fig. 5, Fig. 7, Fig. 9 and Fig. 12 with the height differential and head configuration described above, then the recording pattern as shown in Fig. 6, Fig. 8, Fig. 10 and Fig. 13 can be achieved, and the physical position of the tracking control pulse CTL with respect to the digital recording track on the magnetic tape can be established regardless of the mode.

In regards to the height differential Ha for the analog video signal magnetic recording / reproducing heads 1a and 1b, and the digital video signal magnetic recording / reproducing heads 2a and 2b for the STD mode, settings can be made based on the analog standards for a conventional VTR when using the magnetic heads 2a and 2b also for recording / reproducing of analog signals as well as digital signals; and if the magnetic heads 2a and 2b are only for recording / reproducing digital signals, then appropriate settings may be made regardless of the standards of the conventional VTR.

The example shown in Fig. 17 had a distributed angle differential of 45 degrees for the $\phi$b and the $\phi$c, however this invention is not limited to this 45 degree angle, and a desired setting can be made for the distributed angle differential $\phi$b and $\phi$c, and compatibility can still be maintained with differing head configurations.

The reason compatibility with differing head configurations can be maintained is related below.

Figure 19 is a drawing showing another head placement. In this example, the magnetic heads 1a, 1b and the magnetic heads 2a, 2b and the magnetic heads 4a, 4b are spaced at respective 60 degree intervals. The magnetic heads 3a, 3b are each place in the proximity to the magnetic heads 2a, 2b. The combination of magnetic heads used in each mode are identical to Fig. 17.

Figure 20 is a drawing showing the head height differential corresponding to the head placement of Fig. 19. The head height differential Hb for the magnetic heads 2b, 3b is the same as shown in equation 1, and the head height differential Hc for the magnetic heads 3a and 4a, and for 3b and 4b is the same as shown in equation 2. Consequently, the head height differential Hb becomes equivalent to zero (0) and ($\phi b \fallingdotseq 0$ degrees) and head height differential Hc becomes equivalent to Tp/3 ($\phi c \fallingdotseq 60$ degrees).

Figure 21 is a timing chart showing the record timing in the LS2 mode for the head configuration of Fig. 19 and the head height differentials of Fig. 20. The section differing from the recording timing of Fig. 9 is only the relative change in timing of the recording signals SRA and SRB as well as the head switching signals SWA and SWB, that accompanies the change in the distributed angle differential $\phi$b ($\phi$b is equivalent to 0 degrees). All other sections are the same as in Fig. 9.

In other words, the features of this invention, in that the timing of the tracking control pulse CTL (shown by the arrow $\uparrow$), is set to a specified time ($\Delta$T) elapsing after recording has ended by means of the minus (-) azimuth magnetic head 2b, and further in that the pulse width of the tracking control pulse CTL is made to vary at a ratio of one time for two revolutions of the rotating drum 6, and also in that the timing for changing this recording pulse width for example, by changing the pulse width TL to match the rotations of recording performed by means of the plus (+) azimuth magnetic head 3b, is the same as in Fig. 9. The recording pattern on the magnetic tape 7 for this LS2 mode is consequently, identical to the recording pattern of Fig. 10, and compatibility between devices with different head configurations can be maintained.

The recording timing for the STD mode and the LS3 mode is completely identical to the record timing of Fig. 5 and Fig. 12, and only the relative timing of the head switching signals SWA and SWB as well as the recording signals SRA and SRB are changed to accompany the change in the distributed angle differential $\phi$ c ($\phi c \fallingdotseq 60$ degrees) in the HS mode recording timing, and in all other respects is identical to the record timing of Fig. 7.

Figure 22 is a drawing showing the reproducing timing of the LS2 mode for the head height differential of Fig. 20 and the head configuration of Fig. 19. The section differing from the reproducing timing of Fig. 11 is only that, the same as the recording timing, the relative timing of the head switching signals SWA and SWB as well as the recording signals SPA and SPB were changed to accompany the change in the distributed angle differential $\phi$b ($\phi b \fallingdotseq 0$ degrees), and in all other respects is identical to Fig. 11. The generation of the reproducing reference signals EPA and EPB, by detecting the pulse width of the reproduced tracking control pulse CTL is also the same.

Figure 23 is a drawing showing still another variation in the head placement. In this example, the magnetic heads 1a, 1b, the magnetic heads 2a, 2b and the magnetic heads 4a, 4b are respectively installed at 60 degree intervals, and the magnetic heads 3a, 3b are respectively installed in proximity to the magnetic heads 4a, 4b. The combination of magnetic heads used in each respective mode is basically the same as Fig. 17 and Fig. 19, however in this case other combinations are more efficient. More specifically, the magnetic heads 3a, 3b, 4a, 4b are used during recording / reproducing in HS mode, and in all modes other than HS mode the magnetic heads 3b, 4b are used. The magnetic heads 3b, 4b are used during /reproducing in LS2 mode, and the magnetic heads 2a, 2b are used during reproducing in LS3 mode and STD mode.

Figure 24 is a drawing showing the head height differential when the above magnetic head combination is employed for the head placement of Fig. 23. In this case, the head height differential Hc for the magnetic heads 3a and 4a as well as 3b and 4b is shown in equation 2 the same as in Fig. 18 and Fig. 20, with Hc equivalent to Tp ($\phi c \fallingdotseq 0$ degrees). The heads used in the LP2 mode were changed, so in regards to the height differential Hb of the magnetic heads 2b and 3b, there is no need to specify equation 1. Whereupon, in this example, the head height differential Hb shown in equation 3 is for instance set equivalent to Tp/3 ($\phi b \fallingdotseq 60$ degrees). In this way, in STD mode the scan track for the magnetic heads 3b and 4b during recording, can match with the scan track for the magnetic heads 2a and 2b during reproducing.

$$Hb = Tp \times (\phi b \div 180^\circ) \qquad (3)$$

Figure 25 is recording timing diagrams in STD mode, LS2 mode, and LS3 mode for the head height differential of Fig. 24 and the head configuration of Fig. 23. As related above, all three of these modes use only the magnetic heads 3b and 4b for recording. However, the features of this invention are the same in that that the timing of the tracking control pulse CTL (shown by the arrow ↑ ), is set to a specified time ($\Delta T$) elapsing after recording has ended by means of the minus (-) azimuth magnetic head 4b, and further in that in LS3 mode the pulse width of the tracking control pulse CTL is made to vary at a ratio of one time for three revolutions of the rotating drum 6 and in LS2 mode at one time per two rotations of the rotating drum 6, and in that the timing for changing this recording pulse width, is achieved for example by changing the rotations of the recording performed by means of the plus (+) azimuth magnetic head 3b to match the pulse width TL. The recording pattern on the magnetic tape 7 is consequently identical to the recording patterns of Fig. 6, Fig. 10 and Fig. 13 and compatibility between devices with different head configurations can be maintained.

The record timing for the HS mode is different only in that the relative timing of the head switching signals SWA and SWB as well as the recording signals SRA and SRB were changed to accompany the change in the distributed angle differential $\phi c$ ($\phi c \fallingdotseq 0$ degrees), and in all other respects is identical to the record timing of Fig. 7. The recording pattern also, is identical to the recording pattern of Fig. 8.

Figure 26 is a reproducing timing diagram for LS2 mode for the head height differential of Fig. 24 and the head configuration of Fig. 23. The difference versus the reproduction timing in Fig. 11 and Fig. 22 is only that the relative timing of the head switching signals SWA and SWB as well as the reproduction signals SPA and SPB has changed along with the distributed angle differential $\phi c$ ($\phi b \fallingdotseq 0$ degrees) that is used, and all other sections are identical. The generation of the reproducing reference signals EPA and EPB by detecting the pulse width of the reproduced tracking control pulse CTL is also the same.

As stated above, the reproduction timing in LS3 mode uses the magnetic heads 2a and 2b and so is the same as the reproduction timing of Fig. 14.

However, the digital signals recorded by the above apparatus may be video signals and audio signals digitally compressed by methods such as MPEG (Moving Picture Experts Group). When recording such kind of digitally compressed video signals and audio signals, trick playback video data is recorded along the head scanning track (locus) during trick playback, and a method used to reproduce this video data during trick playback. In such cases, the trick playback data recorded in the STD, or long-time (LS2, LS3, etc.) mode in this invention, is reproduced (or played back) utilizing the magnetic heads 2a and 2b facing each other at mutually opposite azimuths of 180 degrees. When reproducing (or playing back) trick playback video data recorded in the high rate (HS) mode, the magnetic heads 3a and 3b facing each other at a plus (+) azimuth of 180 degrees are utilized for trick playback in the forward direction, and the magnetic heads 4a, 4b facing each other at a minus (-) azimuth of 180 degrees are utilized during trick playback in the reverse direction. This method is not limited to the above described head placement and can also be applied to all types of head placements so that compatibility can therefore be maintained between apparatus with different head configurations.

This invention as described above, can therefore establish the physical position of the tracking control pulse CTL and the digital signal recording track on the magnetic tape 7 so that compatibility can be maintained between apparatus having different head configurations.

Further in this invention, in a long-time mode of N times, during reproduction, tracking of signals that can only be reproduced at a ratio of two tracks for N rotations of the rotating drum can be easily performed by recording tracking control pulses having different pulse widths, at a ratio of one time for N rotations of the rotating drum.

## Claims

**1.** A magnetic recording apparatus comprising

a digital recording means to record a digital signal on a helical track of magnetic tape by utilizing a plurality of magnetic heads respectively having a first azimuth angle or a second azimuth angle with a polarity opposite the polarity of the first azimuth angle,

a tracking control pulse record means to synchronize with the rotation period of said rotating drum and record a tracking control pulse CTL on the linear track on said magnetic tape,

a servo means to rotate the rotating drum at a specified speed and drive the magnetic tape at a rotation speed 1/K (K is an integer of 1/2 or more than 1) of the drive speed; wherein

said digital recording means records each K rotations of the rotating drum on two tracks, comprised of a first track having said first azimuth angle and a second track having said second azimuth angle; and wherein

said tracking control pulse record means records a control tracking control pulse signal at the point where a specified time has elapsed since recording in the valid region of said second track by the specified magnetic head having said second azimuth angle as well as the point at each rotation of the rotating drum equivalent to that specified time.

**2.** A magnetic recording apparatus according to claim 1 wherein said tracking control pulse record means records the rising edge of said tracking control pulse at said point.

**3.** A magnetic recording apparatus according to claim 1 wherein when said K is two or more, said tracking control pulse record means records changes in pulse width of said tracking control pulse at a ratio of one time per K rotations of said rotating drum.

**4.** A magnetic recording apparatus according to claim 1, comprising

a first recording mode to drive said magnetic tape at said specified drive speed and record two tracks for each one rotation of said rotating drum,

a second record mode to drive said magnetic tape at twice the speed of said specified drive speed and record four tracks for each one rotation of said rotating drum (said K = 1/2),

a third record mode to drive said magnetic tape at one-half of said specified drive speed and record two tracks for each one rotation of said rotating drum (said K = 2), and

a fourth recording mode to drive said magnetic tape at 1/N (N is an odd number of 3 or more) of said specified drive speed and record two tracks for every N rotations of said rotating drum.

**5.** A magnetic recording apparatus according to claim 4, comprising

a first magnetic head installed in a first position of said rotating drum and having said first azimuth angle,

a second magnetic head installed in a second position of said rotating drum facing said first position at 180 degrees and having said second azimuth angle,

a third magnetic head installed in a third position of said rotating drum and having said first azimuth angle,

a fourth magnetic head installed in a fourth position of said rotating drum facing said third position at 180 degrees and having said first azimuth angle,

a fifth magnetic head installed at a fifth position of said rotating drum and having a fifth azimuth angle; and

a sixth magnetic head installed at a sixth position of said rotating drum facing said fifth position at 180 degrees and having a second azimuth angle, wherein said magnetic recording apparatus

utilizes said first and second magnetic heads in said first recording mode,

utilizes said third, fourth, fifth and sixth magnetic heads in said second recording mode,

utilizes said second and fourth magnetic heads in said third recording mode and

utilizes said first and second magnetic heads in said fourth recording mode.

**6.** A magnetic recording apparatus according to claim 5, comprising

a seventh magnetic head having a third azimuth angle and installed in the seventh position of said rotating drum, and

an eighth magnetic head installed at an eighth position of said rotating drum facing said seventh position at 180 degrees and having a fourth azimuth angle with a polarity opposite the polarity of said third azimuth angle, wherein in a fifth recording mode said magnetic tape is driven at a fifth drive speed and recording of an analog video signal is performed utilizing said seventh and said eighth magnetic heads.

**7.** A magnetic recording apparatus according to claim 6, comprising

a ninth magnetic head having said fourth azimuth angle and installed at the ninth position in proximity to said seventh position, and

a tenth magnetic head having said third azimuth angle installed at a tenth position facing said ninth position at 180 degrees and in proximity to said eighth position, wherein in the sixth recording mode said magnetic tape is driven at said fifth drive speed being one-third of the sixth drive speed, and recording of said analog video signal is performed by utilizing said ninth and tenth magnetic heads.

**8.** A magnetic recording apparatus according to claim 6 wherein said fifth or said sixth recording mode performs recording and reproducing of analog audio signals by utilizing said first and said second magnetic heads.

**9.** A magnetic recording apparatus according to claim 6 wherein said fifth drive speed and said second drive speed are equal.

**10.** A magnetic recording / reproducing apparatus comprising

a reproducing means to reproduce the recorded signal and to record a digital signal on the helical track of the magnetic tape by utilizing a plurality of magnetic heads installed on a rotating drum having respectively said first azimuth angle or a said second azimuth angle with a polarity opposite the polarity of said first azimuth angle,

a reproducing means to synchronize with the rotation period of said rotating drum, record the tracking control pulse on the linear track on said magnetic tape and reproduce the recorded pulses, and

a servo means to rotate said rotating drum at a specified drive speed and drive said magnetic tape at a drive speed 1/K (K is 1/2 or an integer of 1 or more) of the specified drive speed, wherein

said digital signal recording / reproducing means for each K rotations of said rotating drum performs recording / reproducing on two tracks comprised of a first track having said first azimuth angle and a second track having said second azimuth angle,

said tracking control pulse record/reproducing means records said tracking control pulse by means of specified magnetic head having said second azimuth angle at the point in time recording has completed in the effective region of said second track as well as an equivalent point in time of one rotation of said rotating drum, and

said servo means controls the drive speed of said magnetic tape based on said reproduced tracking control pulse during reproducing.

**11.** A magnetic recording / reproducing apparatus according to claim 10 wherein said tracking control pulse, recording / reproducing means records the rising edge of said tracking control pulse at said point in time and, said servo means controls the drive speed of said magnetic tape during reproduction based on the rising edge of said reproduced tracking control pulse.

**12.** A magnetic recording / reproducing apparatus according to claim 10 wherein when said K is 2 or more, said tracking control pulse recording / reproducing means changes the pulse width of said tracking control pulse at a ratio of one time for K rotations of said rotating drum and records said tracking control pulse and, said servo means controls the drive speed of said magnetic tape during reproducing so the level of the reproduced signal corresponding to the recorded tracking control pulse having said changed pulse width, reaches a maximum level.

**13.** A magnetic recording / reproducing apparatus according to claim 10, comprising

a first recording / reproducing mode (said K = 1) to drive said magnetic tape at said specified drive speed and perform recording / reproducing on two tracks for each one rotation of said rotating drum and,

a second recording / reproducing mode (said K = 1/2) to drive said magnetic tape at a second drive speed twice said specified drive speed and perform recording / reproducing on four tracks for each one rotation of said rotating drum,

a third recording / reproducing mode (said K = 2) to drive said magnetic tape at a third drive speed one-half of said specified drive speed and perform recording / reproducing on two tracks for every two rotations of said rotating drum, and

a fourth recording / reproducing mode to drive said magnetic tape at 1/N (N is an odd number of 3 or more) of said specified drive speed and perform recording / reproducing on two tracks for every N rotations of said rotating drum.

**14.** A magnetic recording / reproducing apparatus according to claim 13, comprising

a first magnetic head having said first azimuth angle and installed in a first position on said rotating drum,

a second magnetic head having said second azimuth angle and installed in a second position of said rotating drum facing said first position at 180 degrees,

a third magnetic head having said first azimuth angle and installed in a third position of said rotating drum,

a fourth magnetic head having said first azimuth angle and installed in a fourth position of said rotating drum facing said third position at 180 degrees,

a fifth magnetic head having a second azimuth angle and installed at a fifth position of said rotating drum, and

a sixth magnetic head having a second azimuth angle and installed at a sixth position of said rotating drum facing said fifth position at 180 degrees, wherein

said magnetic recording apparatus
utilizes said first and second magnetic heads in said first recording / reproducing mode,
utilizes said third, fourth, fifth and sixth magnetic heads in said second recording / reproducing mode,
utilizes said second and fourth magnetic heads in said third recording mode and utilizes said first and second magnetic heads in said fourth recording / reproducing mode.

**15.** A magnetic recording / reproducing apparatus according to claim 14, comprising

a seventh magnetic head having a third azimuth angle and installed in a seventh position on said rotating record drum, and
an eighth magnetic head having a fourth azimuth angle with a polarity opposite the polarity of said third azimuth angle and installed in an eighth position facing said seventh position at 180 degrees wherein in said fifth recording / reproducing mode the magnetic tape is driven at a fifth drive speed of twice said first drive speed and the analog video signal is recorded and reproduced utilizing said seventh and said eighth magnetic heads.

**16.** A magnetic recording / reproducing apparatus according to claim 15, comprising

a ninth magnetic head having a fourth azimuth angle and installed at a ninth position in proximity to said seventh position, and
a tenth magnetic head having a third azimuth angle and installed at a tenth position facing said ninth position at 180 degrees and in proximity to said ninth position, wherein in a sixth recording / reproducing mode the magnetic tape is driven at said sixth drive speed one-third of said fifth drive speed and records/reproduces the analog video signal utilizing said ninth and tenth magnetic heads.

**17.** A magnetic recording / reproducing apparatus according to claim 16, wherein said fifth and said sixth recording / reproducing modes perform recording and reproducing of the analog audio signal by utilizing said first and said second magnetic heads.

**18.** A magnetic recording / reproducing apparatus according to claim 15, wherein said fifth drive speed is equal to said second drive speed.

**19.** A magnetic recording / reproducing apparatus according to claim 14, wherein

said digital signal is a compressed encoded video signal and audio signal,
said digital signal recording / reproducing means, performs recording along with said compressed encoded video signal and audio signal of at least the trick playback video data,
said first and said second magnetic heads are utilized when reproducing said trick playback video data recorded in said first, said third or fourth recording / reproducing modes, and
when reproducing said trick playback video data recorded in said second recording / reproducing mode, said third and fourth magnetic heads are utilized during trick playback in the forward direction and said fifth and sixth magnetic heads are utilized during trick playback in the reverse direction.

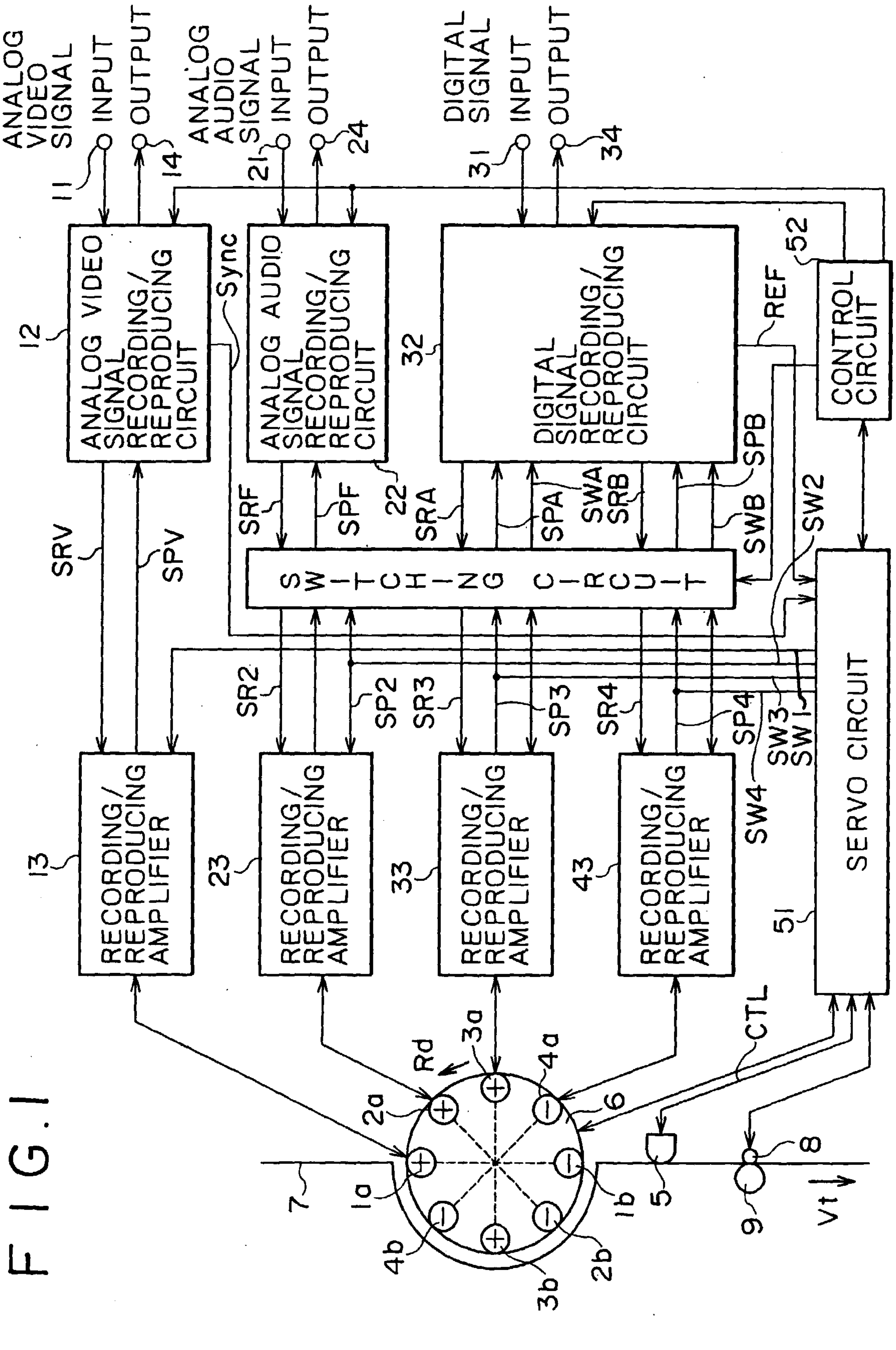
ANALOG VIDEO SIGNAL
INPUT
OUTPUT
ANALOG AUDIO SIGNAL
INPUT
OUTPUT
DIGITAL SIGNAL
INPUT
OUTPUT
ANALOG VIDEO SIGNAL RECORDING/ REPRODUCING CIRCUIT
ANALOG AUDIO SIGNAL RECORDING/ REPRODUCING CIRCUIT
DIGITAL SIGNAL RECORDING/ REPRODUCING CIRCUIT
CONTROL CIRCUIT
SWITCHING CIRCUIT
SERVO CIRCUIT
RECORDING/ REPRODUCING AMPLIFIER
RECORDING/ REPRODUCING AMPLIFIER
RECORDING/ REPRODUCING AMPLIFIER
RECORDING/ REPRODUCING AMPLIFIER
11
14
21
24
31
34
12
22
32
52
13
23
33
43
51
Sync
REF
SRV
SPV
SRF
SPF
SRA
SPA
SWA
SRB
SPB
SWB
SW2
SR2
SP2
SR3
SP3
SR4
SP4
SW3
SW1
SW4
CTL
Rd
1a
1b
2a
2b
3a
3b
4a
4b
5
6
7
8
9
Vt
F I G. 1

FIG.2

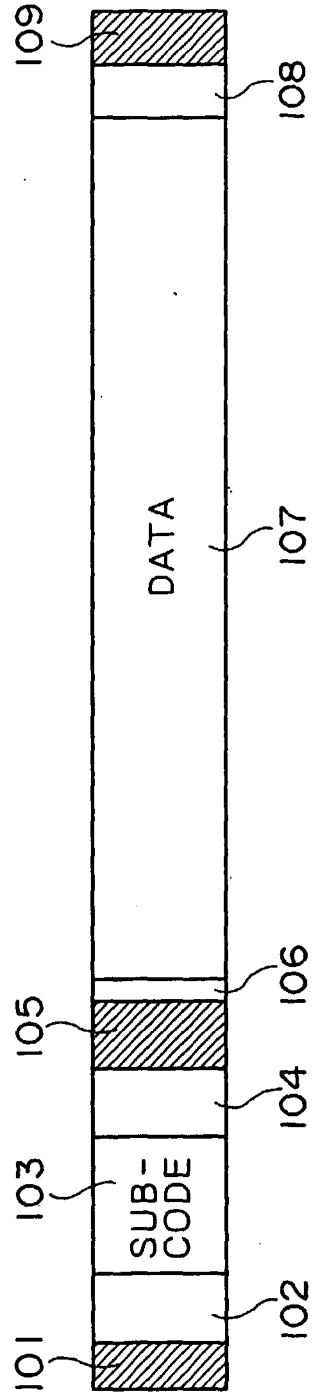
101
102
SUB-CODE
103
104
105
106
DATA
107
108
109

FIG.3

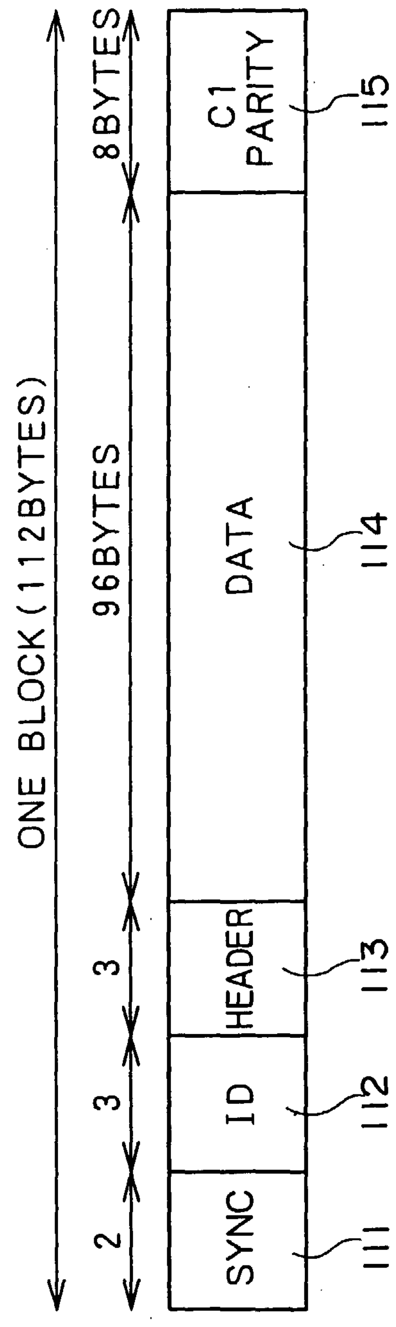
ONE BLOCK (112BYTES)
2
3
3
96BYTES
8BYTES
SYNC
ID
HEADER
DATA
C1 PARITY
111
112
113
114
115

FIG. 4

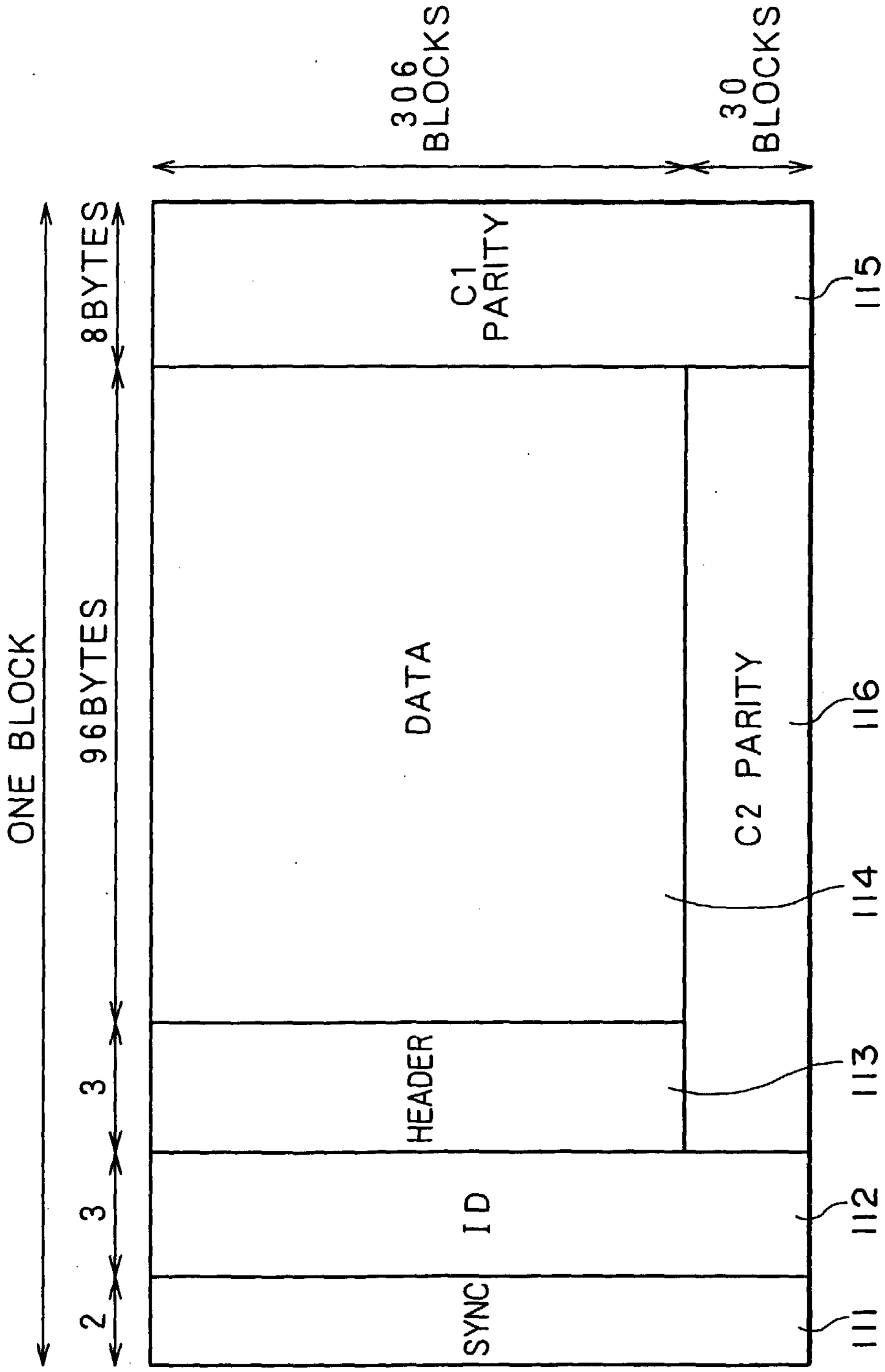
306 BLOCKS
30 BLOCKS
ONE BLOCK
8BYTES
96BYTES
3
3
2
C1 PARITY
DATA
C2 PARITY
HEADER
ID
SYNC
115
116
114
113
112
111

FIG.5

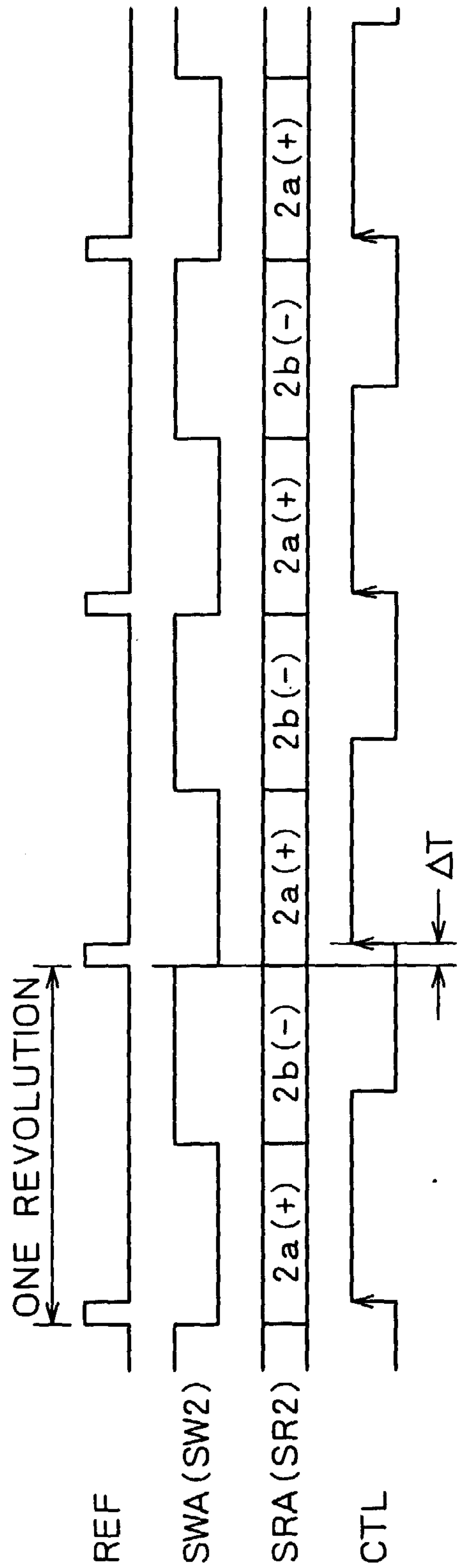

FIG. 6

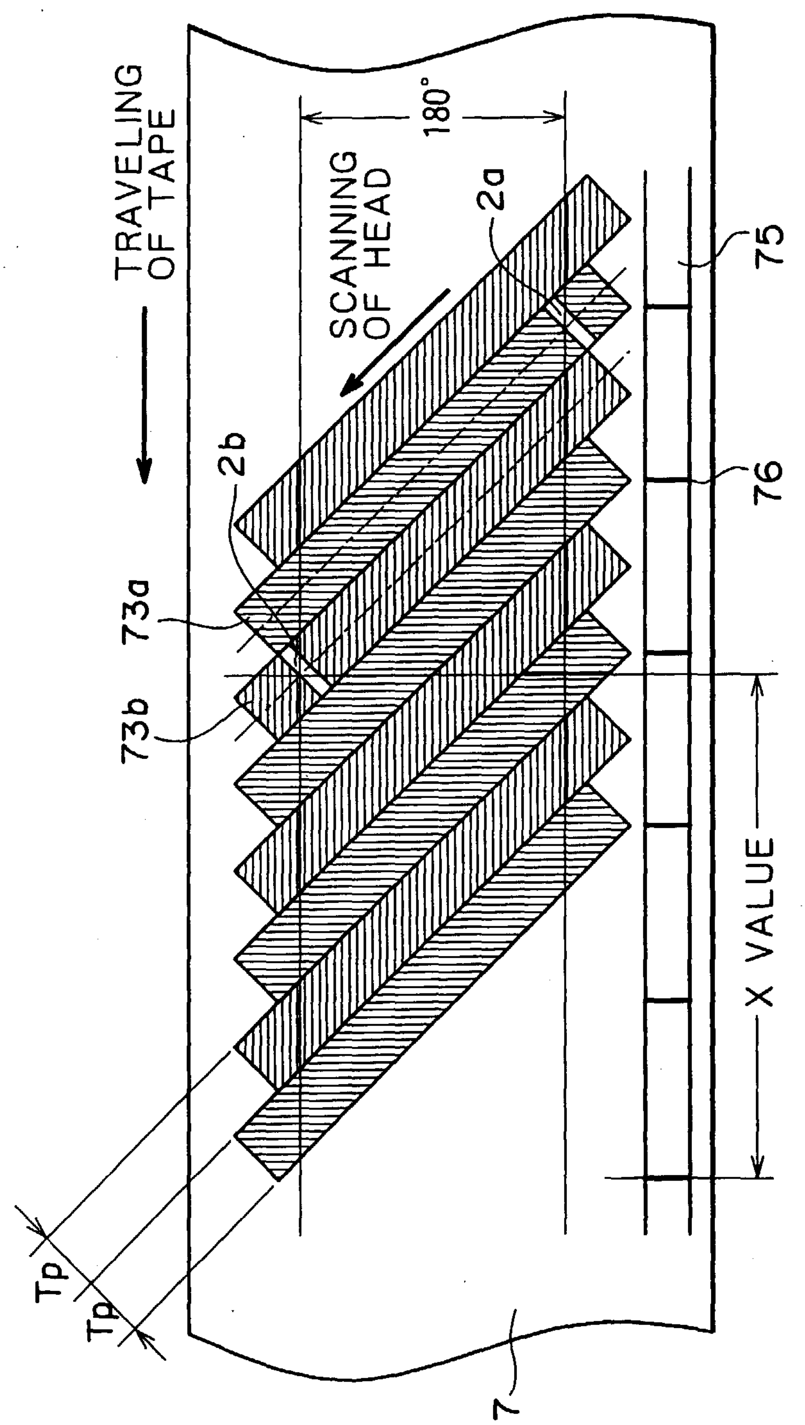
TRAVELING OF TAPE
SCANNING OF HEAD
180°
2a
2b
73a
73b
75
76
X VALUE
Tp
Tp
7

FIG. 7

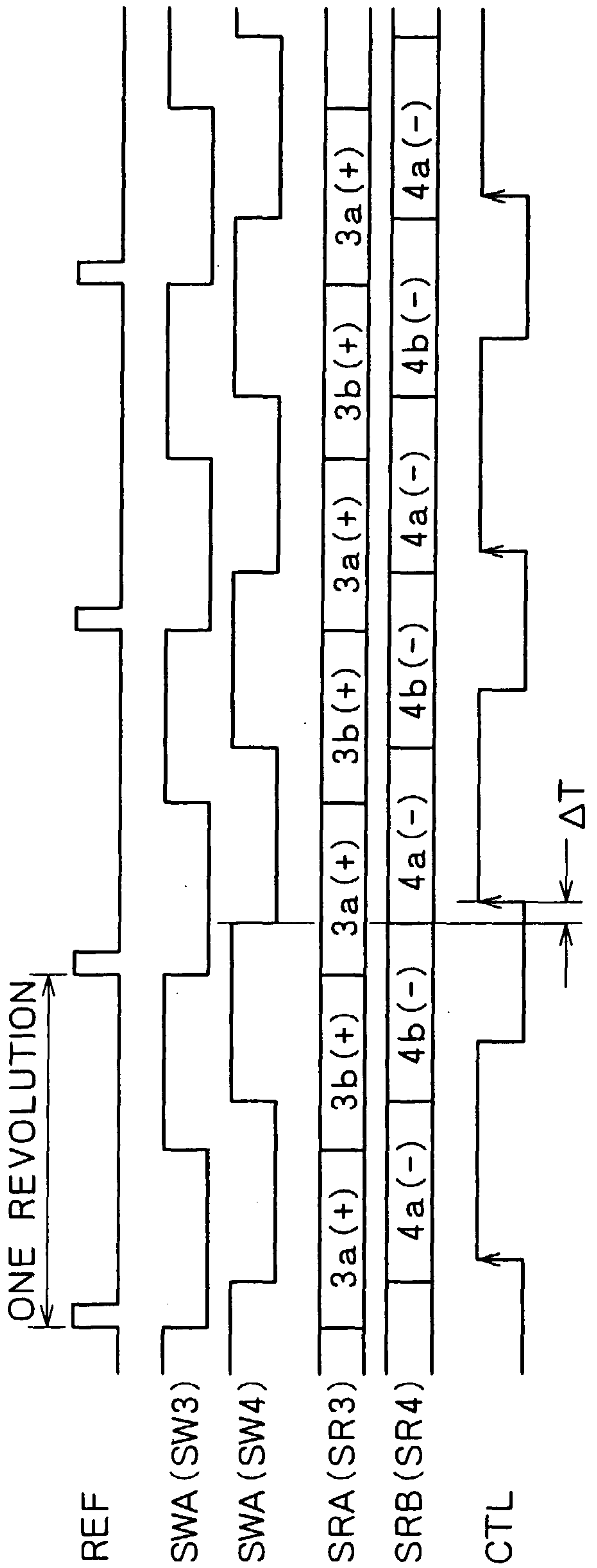
ONE REVOLUTION
REF
SWA (SW3)
SWA (SW4)
SRA (SR3)
SRB (SR4)
CTL
3a(+)
3b(+)
4a(-)
4b(-)
ΔT

F I G. 8

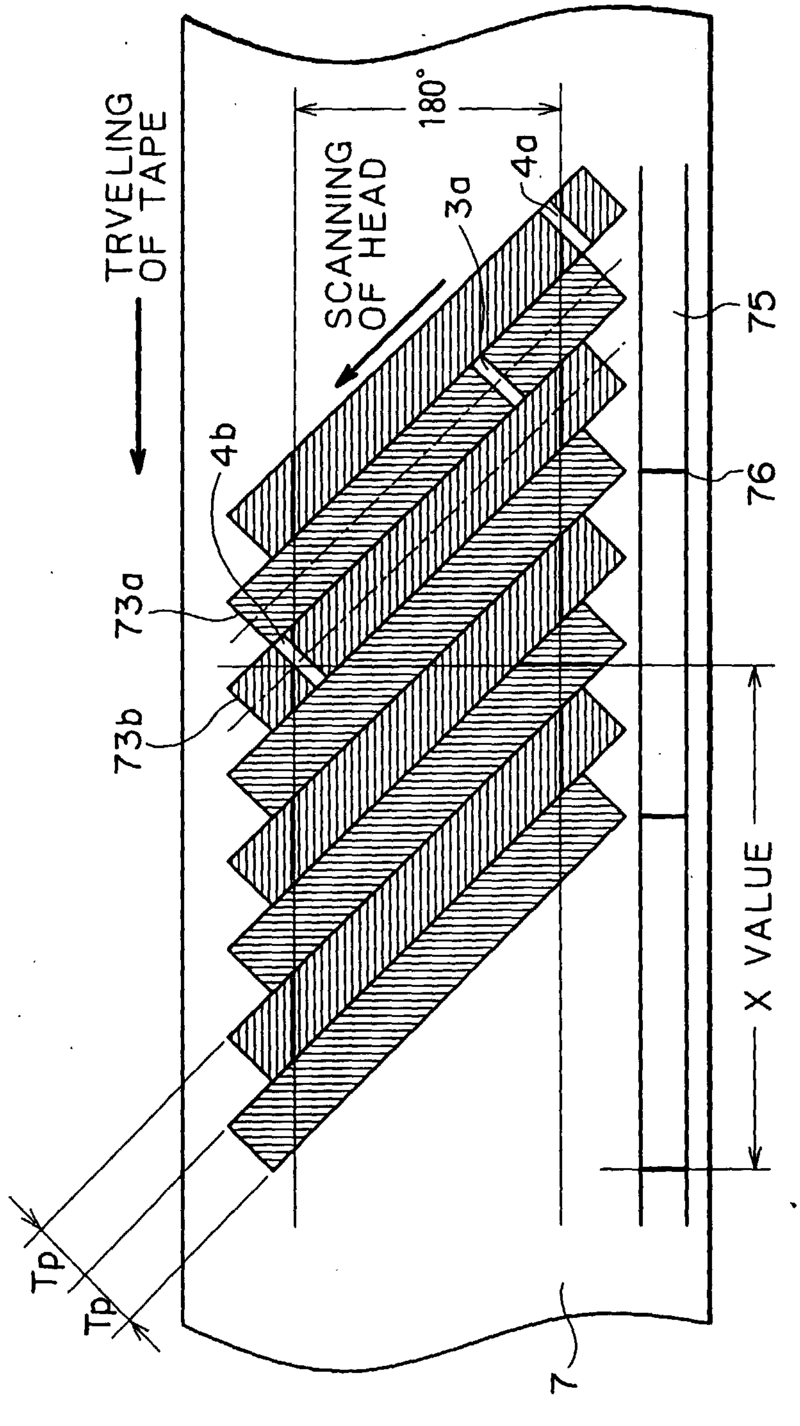
TRVELING OF TAPE
SCANNING OF HEAD
180°
4a
3a
4b
73a
73b
75
76
X VALUE
Tp
Tp
7

FIG. 9

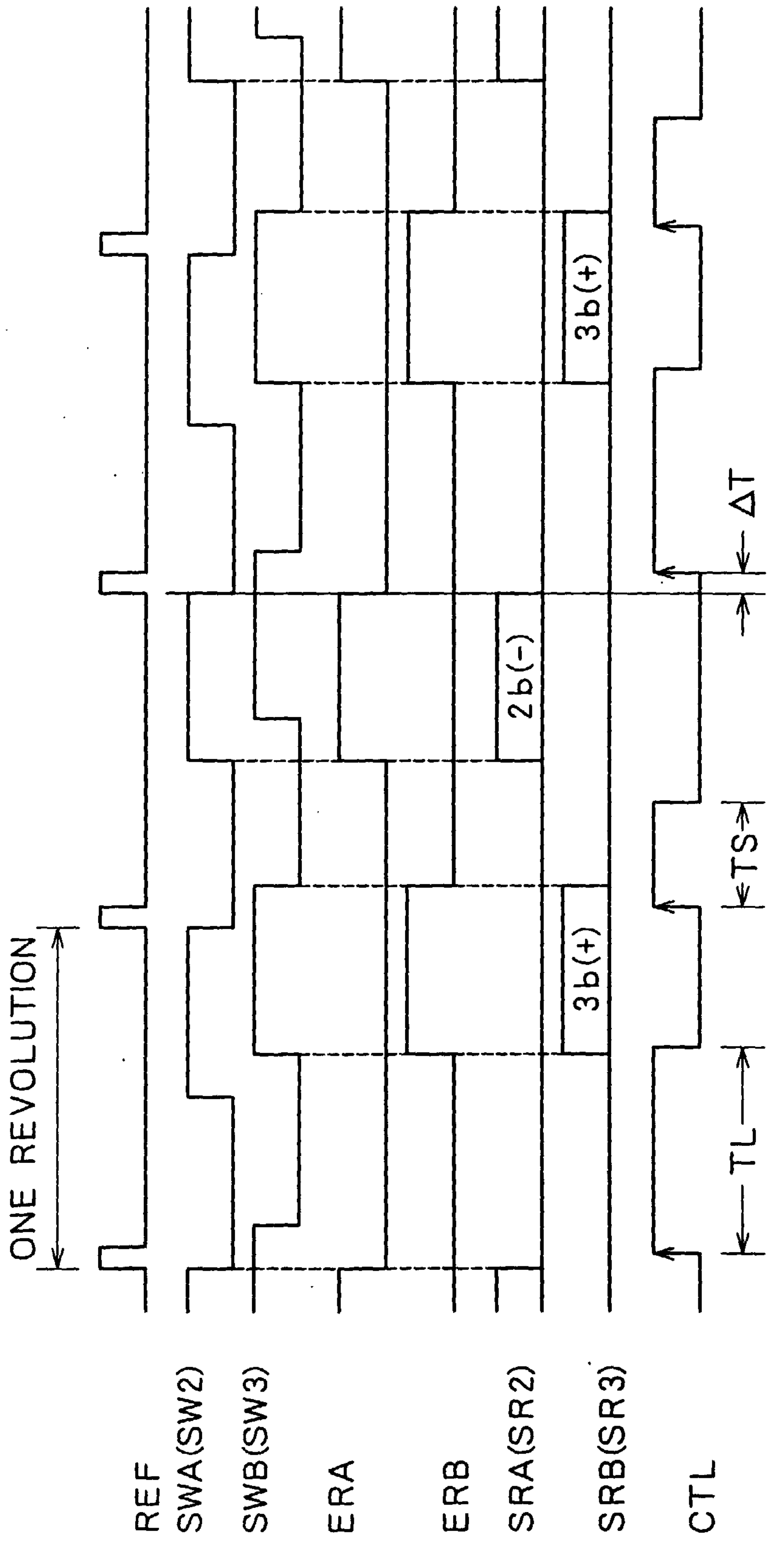
ONE REVOLUTION
REF
SWA(SW2)
SWB(SW3)
ERA
ERB
SRA(SR2)
SRB(SR3)
CTL
3b(+)
2b(-)
3b(+)
TL
TS
ΔT

FIG.10

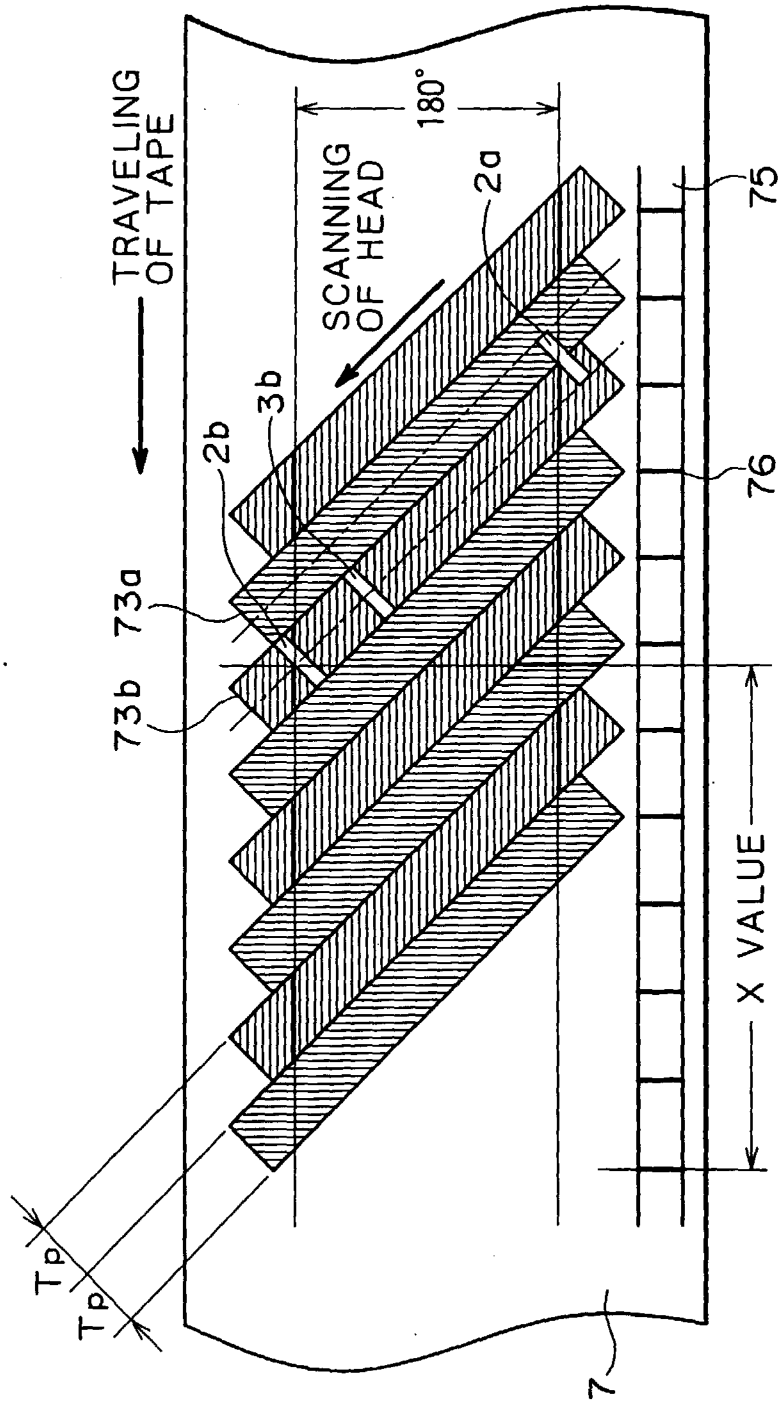
TRAVELING OF TAPE
180°
SCANNING OF HEAD
2a
3b
2b
73a
73b
75
76
X VALUE
Tp
Tp
7

FIG.11

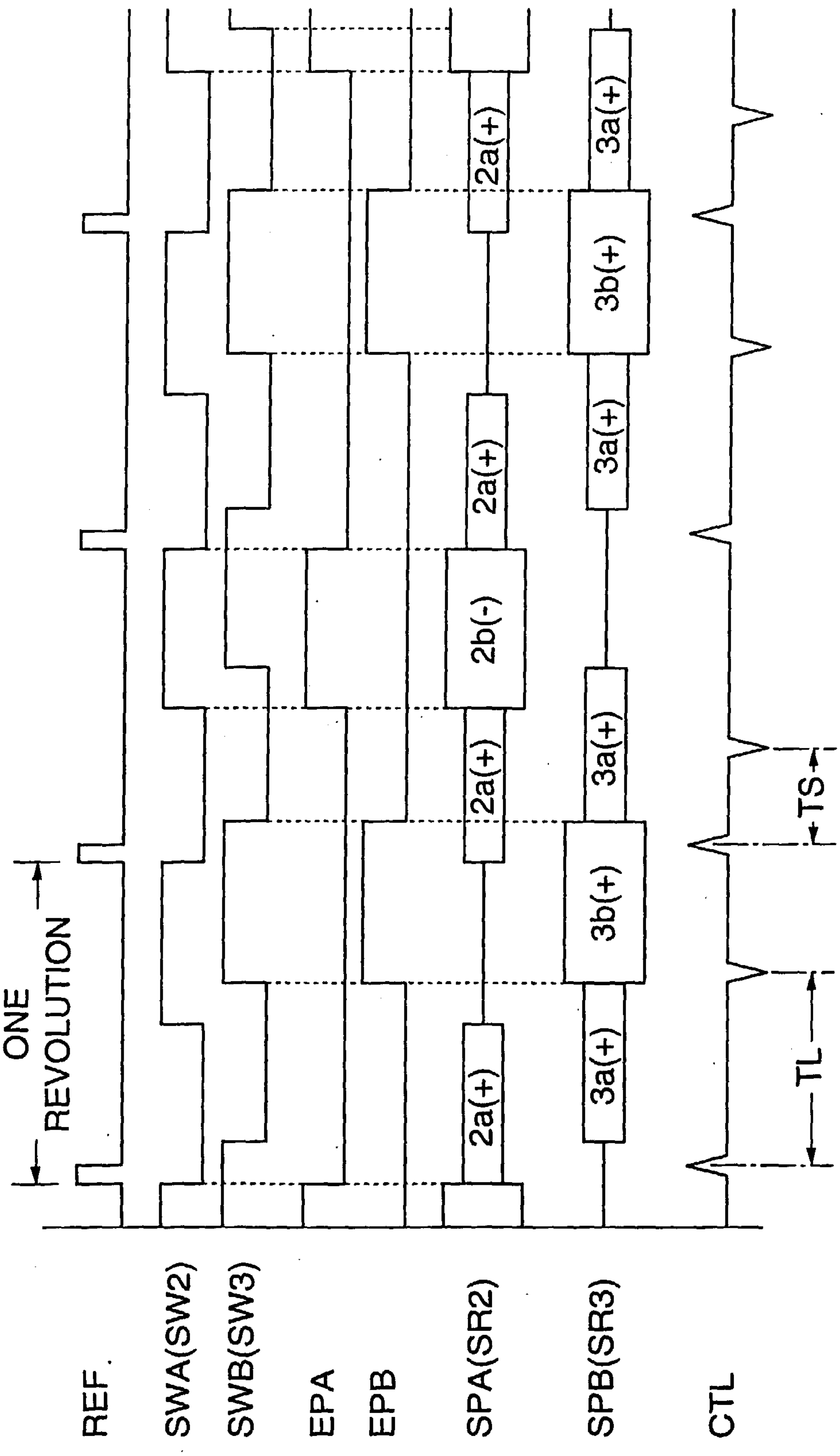
ONE REVOLUTION
REF.
SWA(SW2)
SWB(SW3)
EPA
EPB
SPA(SR2)
SPB(SR3)
CTL
2a(+)
2b(-)
3a(+)
3b(+)
TS
TL

FIG.12

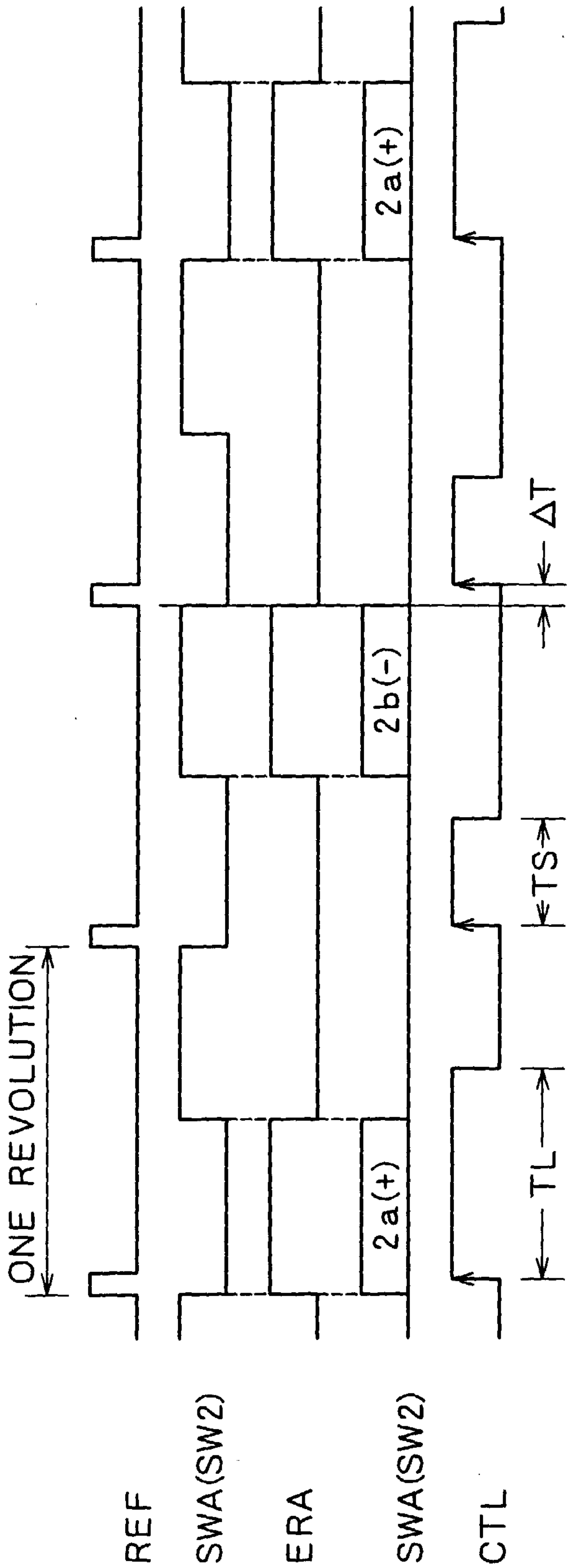

FIG.13

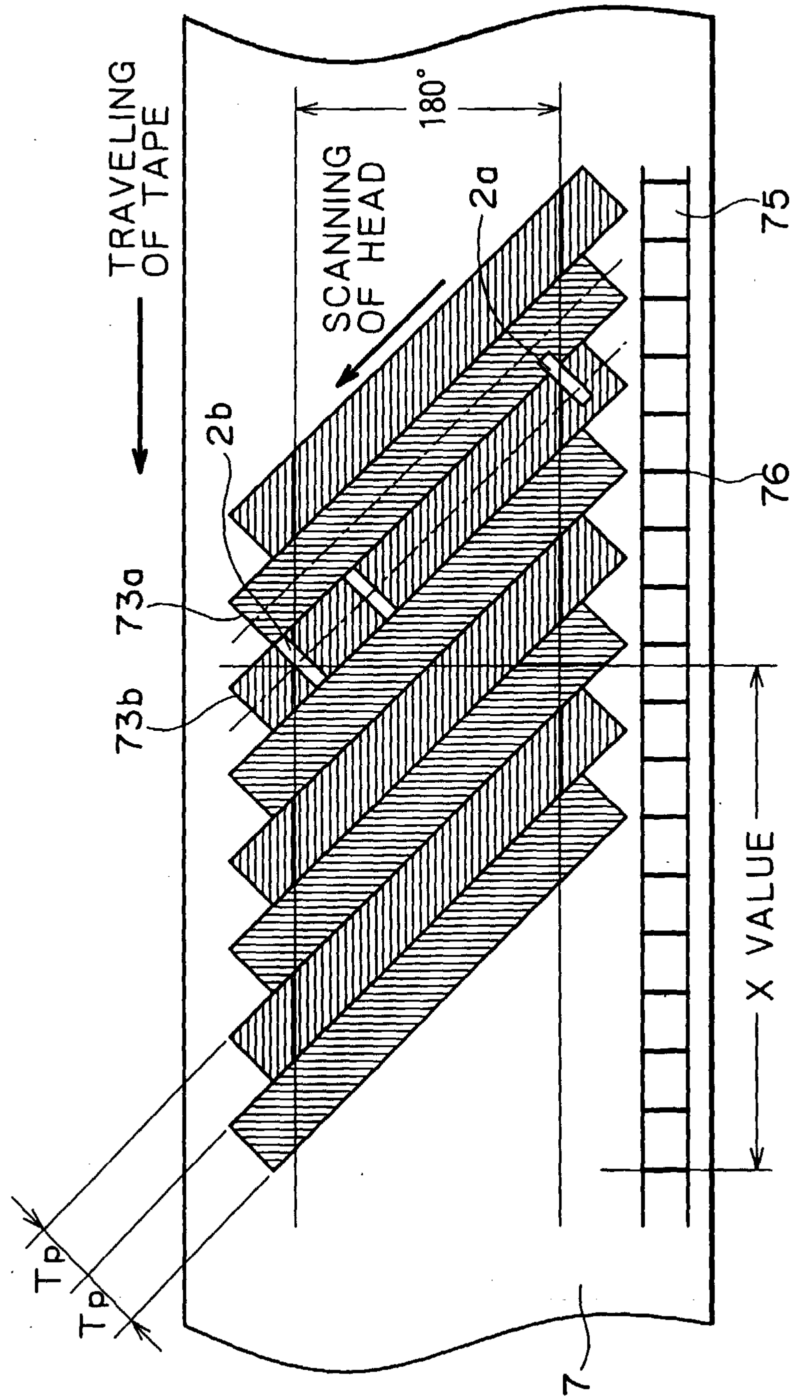
TRAVELING OF TAPE
SCANNING OF HEAD
180°
2a
2b
73a
73b
75
76
X VALUE
Tp
Tp
7

FIG. 14

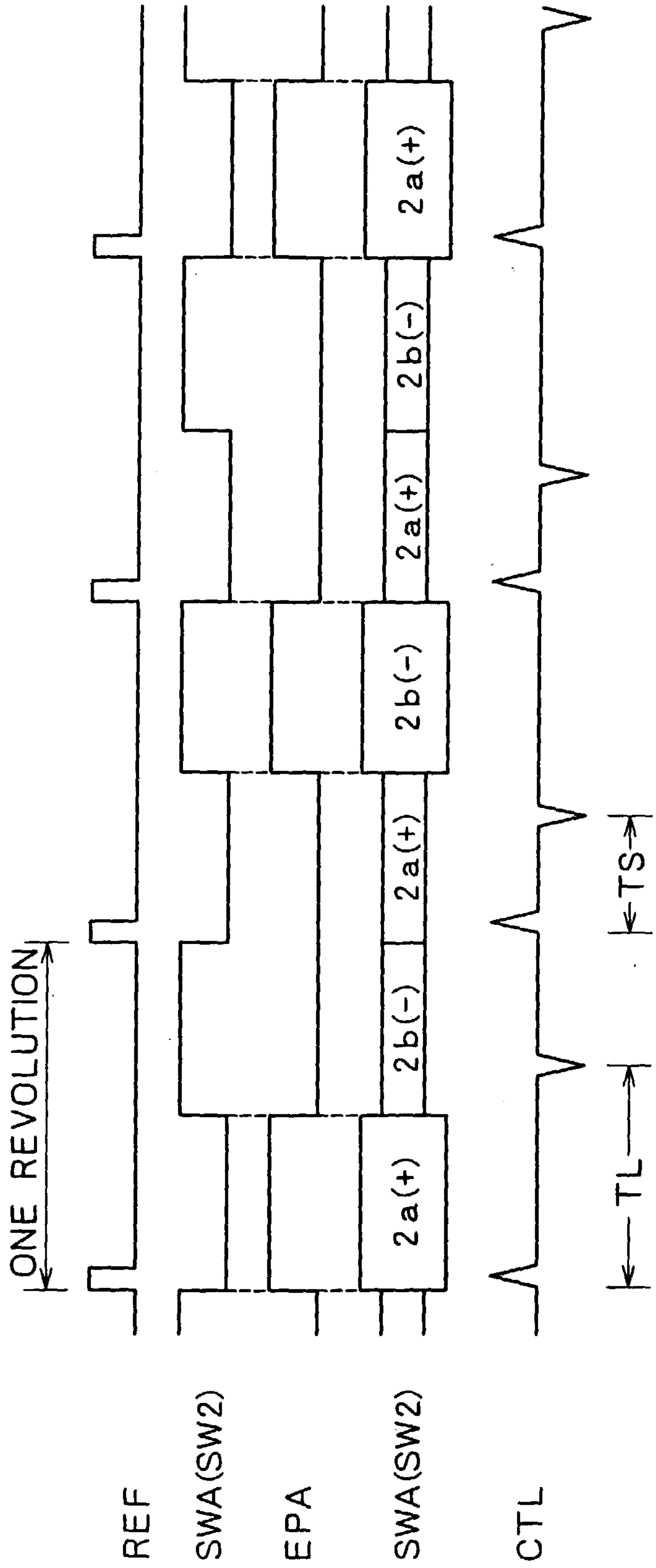
REF
SWA(SW2)
EPA
SWA(SW2)
CTL
ONE REVOLUTION
2a(+)
2b(-)
2a(+)
2b(-)
2a(+)
2b(-)
2a(+)
TL
TS

FIG.15

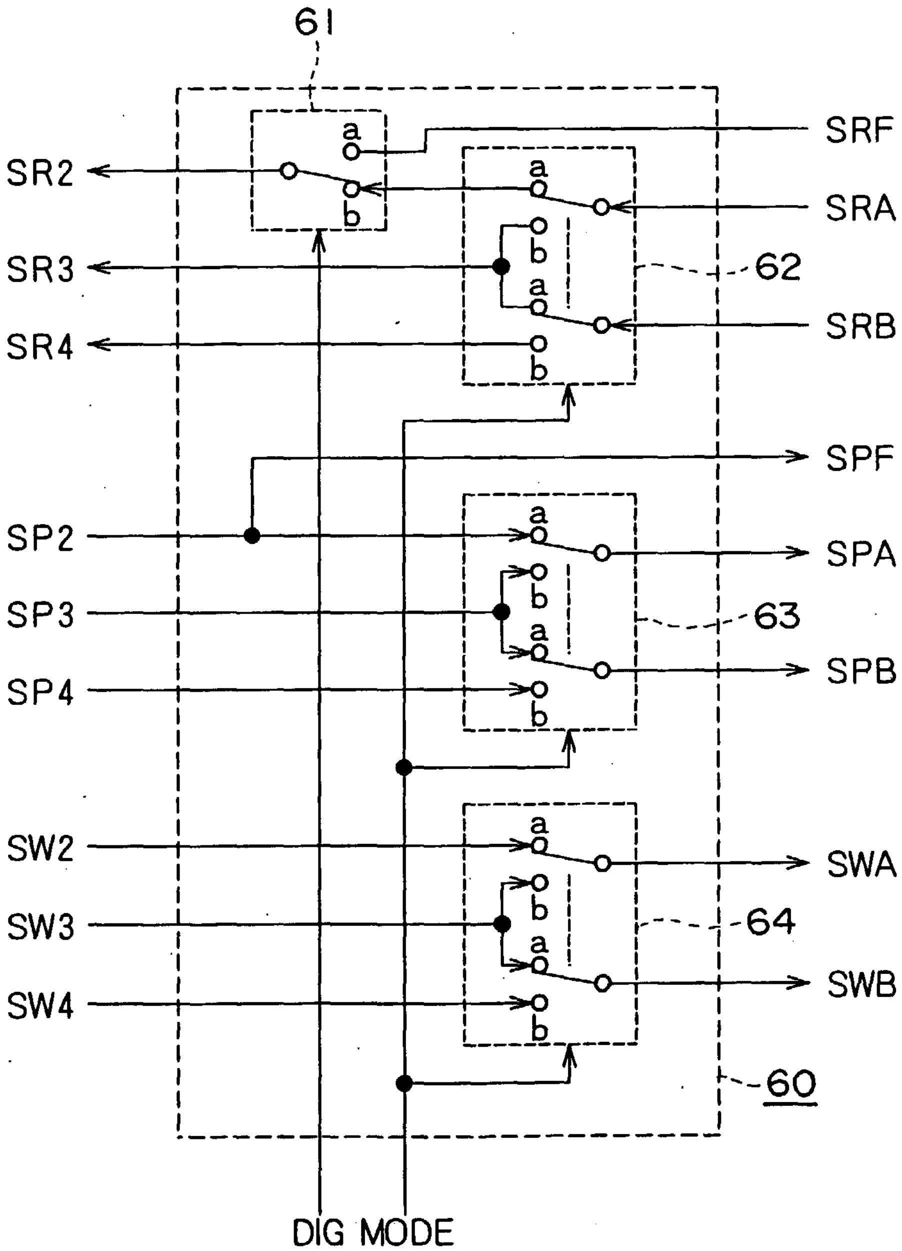
61
a
b
SR2
SR3
SR4
SRF
SRA
SRB
62
SPF
SP2
SP3
SP4
SPA
SPB
63
SW2
SW3
SW4
SWA
SWB
64
60
DIG MODE

FIG.16

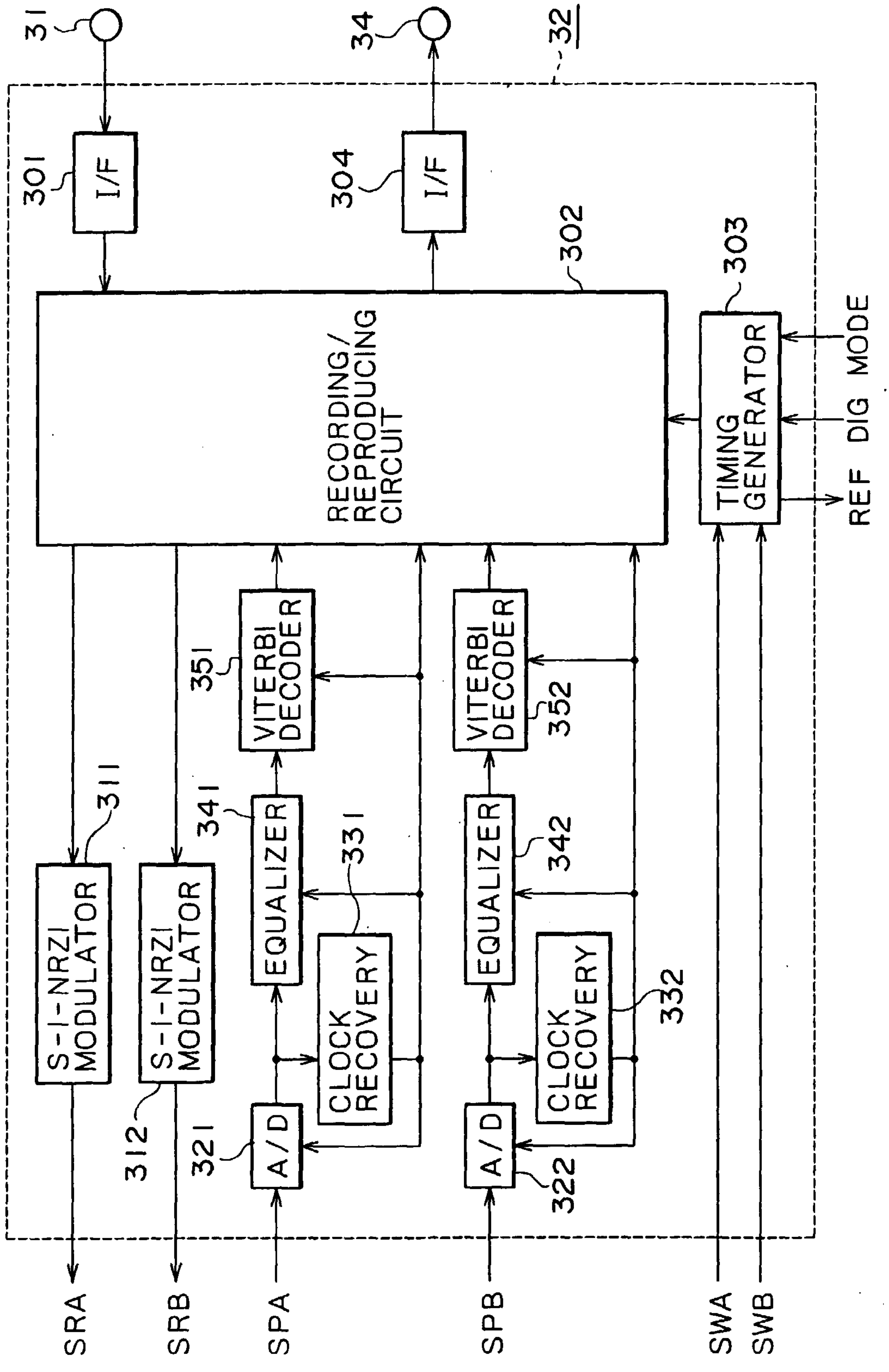
31
34
32
301
I/F
304
I/F
302
RECORDING/
REPRODUCING
CIRCUIT
303
TIMING
GENERATOR
REF
DIG
MODE
311
S-I-NRZI
MODULATOR
312
S-I-NRZI
MODULATOR
321
A/D
322
A/D
331
CLOCK
RECOVERY
332
CLOCK
RECOVERY
341
EQUALIZER
342
EQUALIZER
351
VITERBI
DECODER
352
VITERBI
DECODER
SRA
SRB
SPA
SPB
SWA
SWB

FIG.17

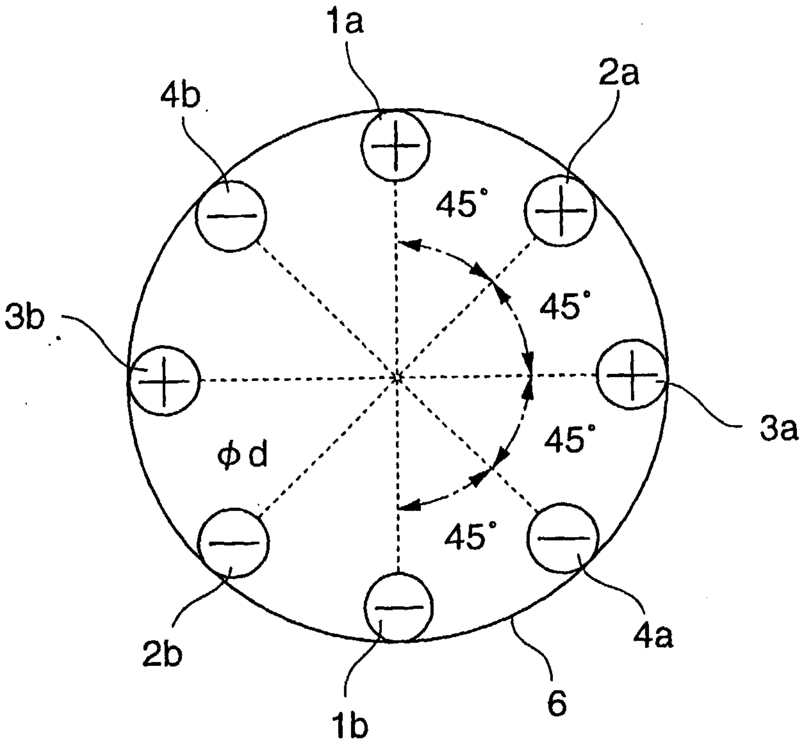

FIG.18

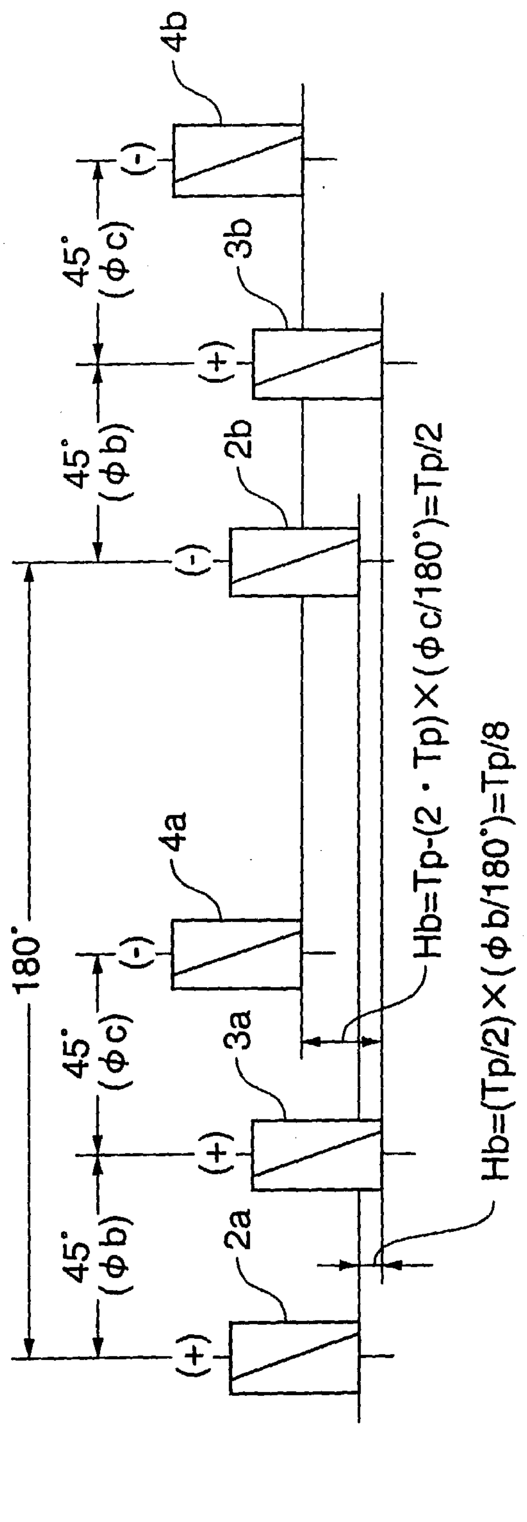
4b
(-)
45°
(φc)
3b
(+)
45°
(φb)
2b
(-)
180°
4a
(-)
45°
(φc)
3a
(+)
45°
(φb)
2a
(+)
Hb=Tp-(2・Tp)×(φc/180°)=Tp/2
Hb=(Tp/2)×(φb/180°)=Tp/8

FIG.19

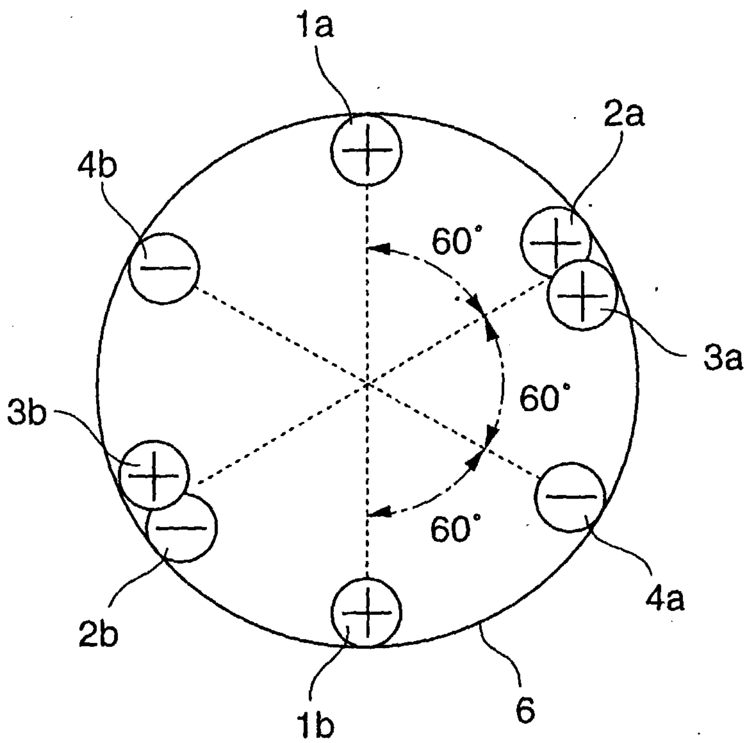

FIG.20

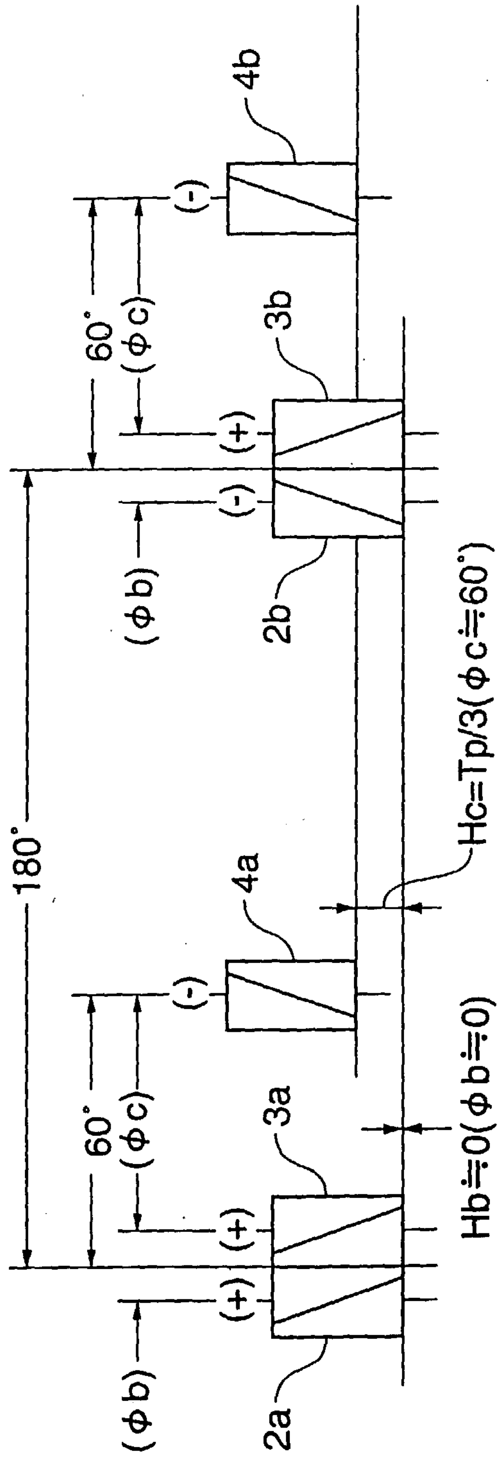

FIG.21

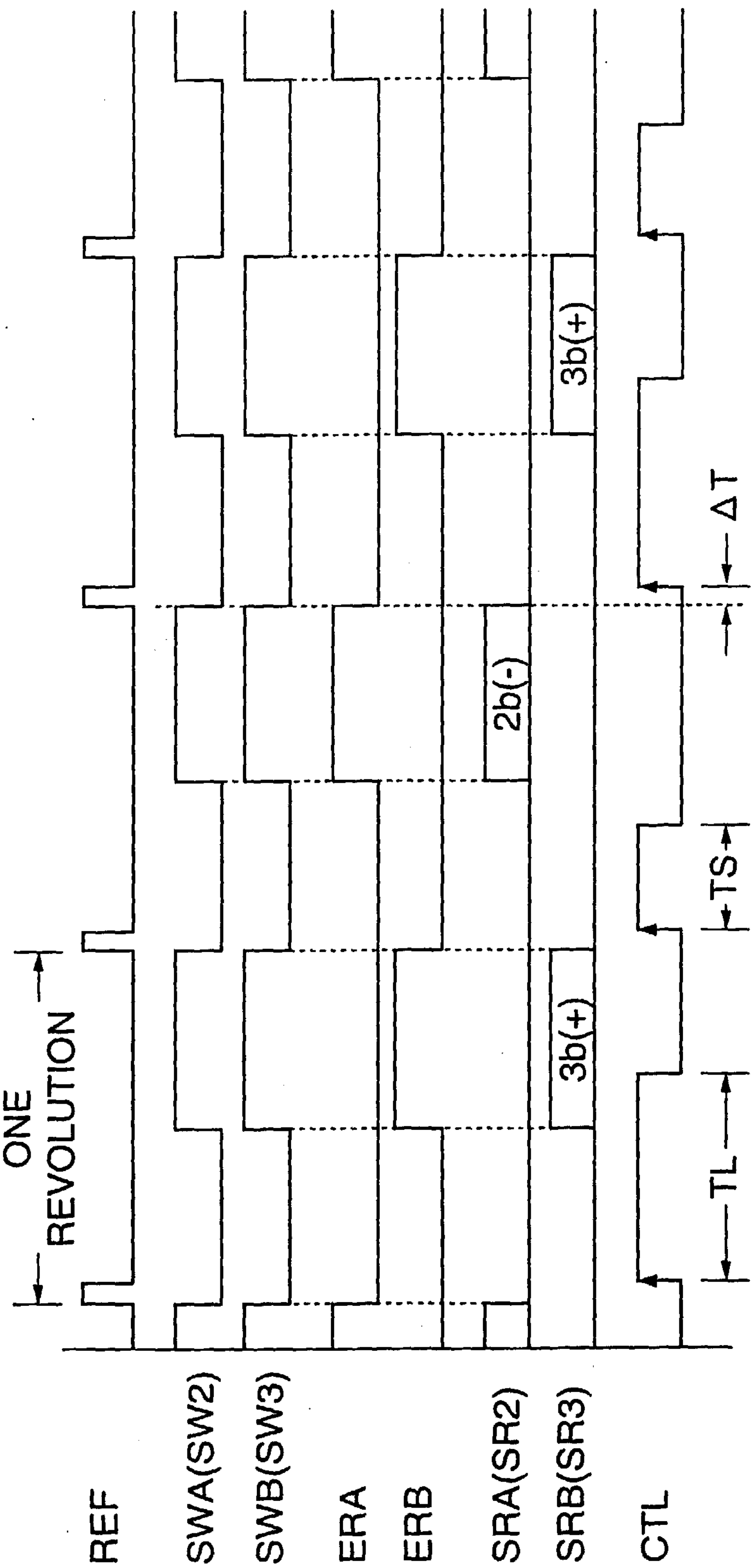
ONE REVOLUTION
REF
SWA(SW2)
SWB(SW3)
ERA
ERB
SRA(SR2)
SRB(SR3)
CTL
3b(+)
2b(-)
3b(+)
TL
TS
ΔT

FIG.22

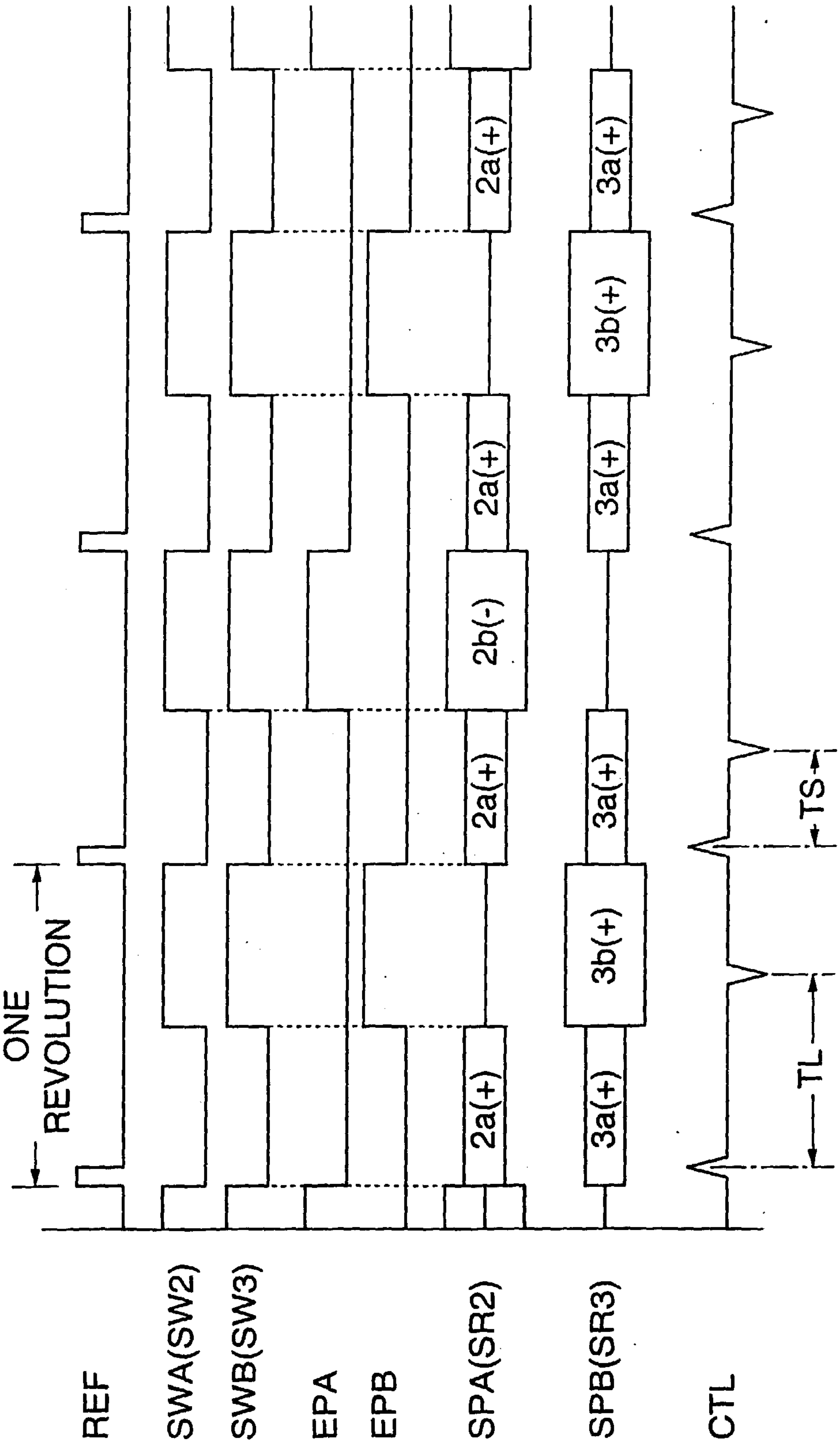
ONE REVOLUTION
REF
SWA(SW2)
SWB(SW3)
EPA
EPB
SPA(SR2)
SPB(SR3)
CTL
2a(+)
2b(-)
3a(+)
3b(+)
TL
TS

FIG.23

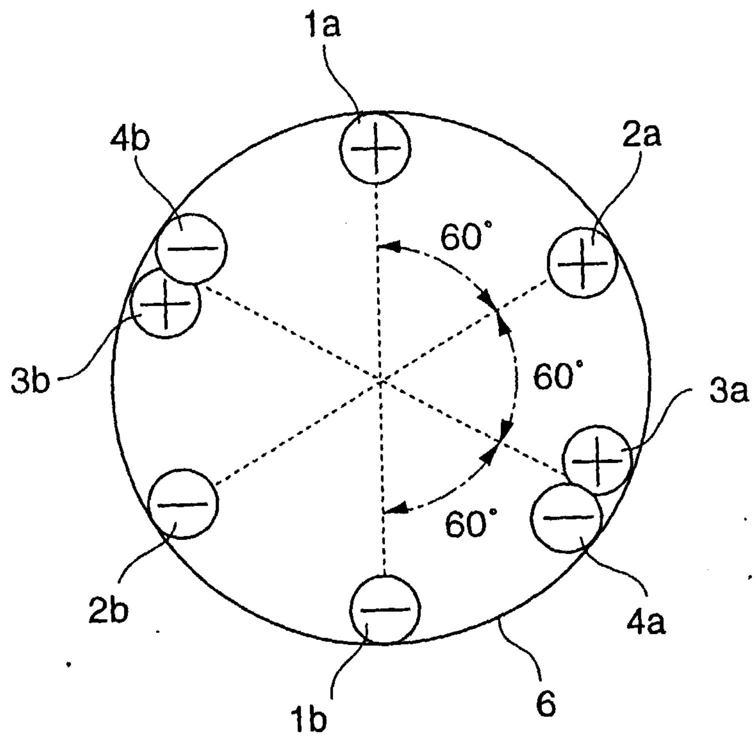

FIG.24

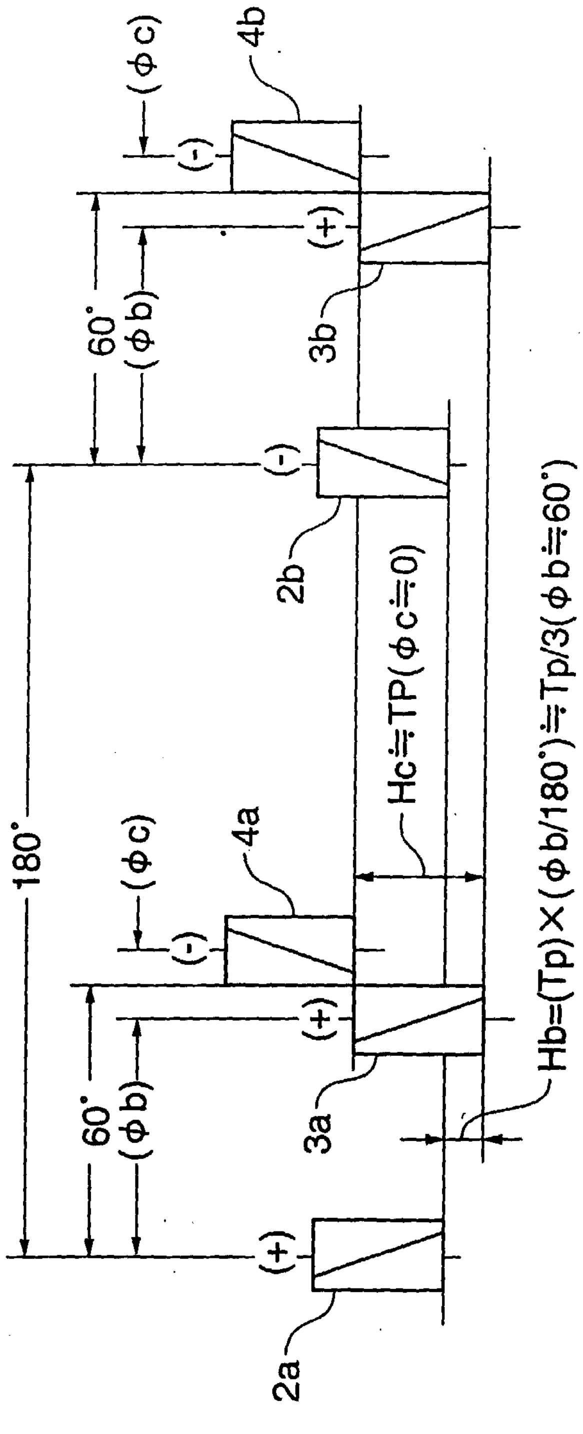

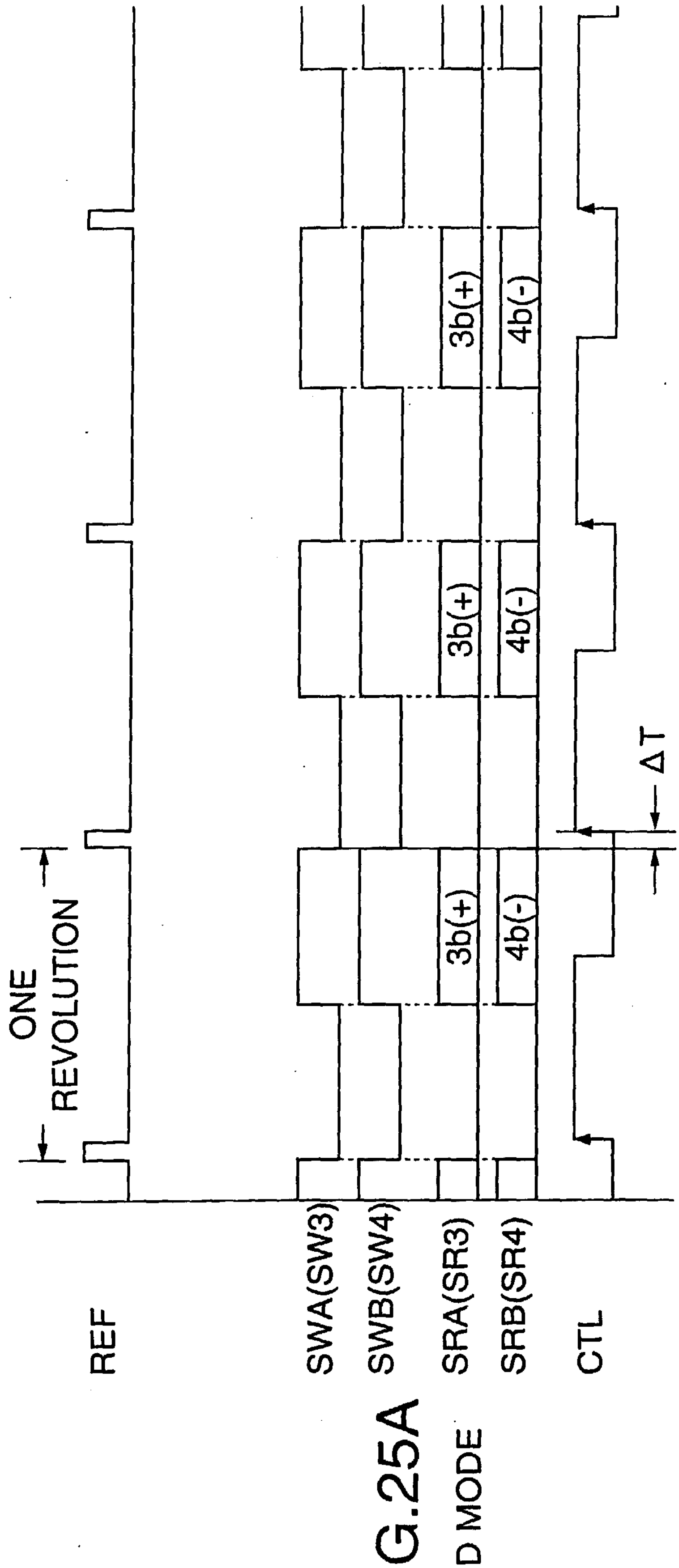


FIG.25A
SD MODE

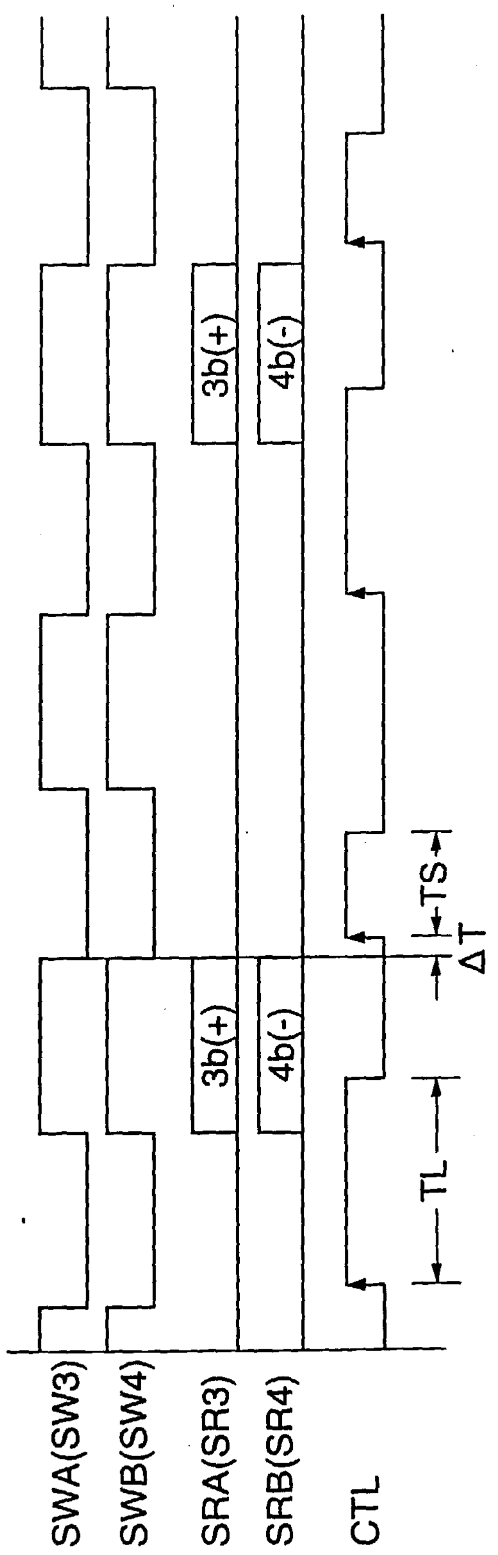


FIG.25B
LP2 MODE

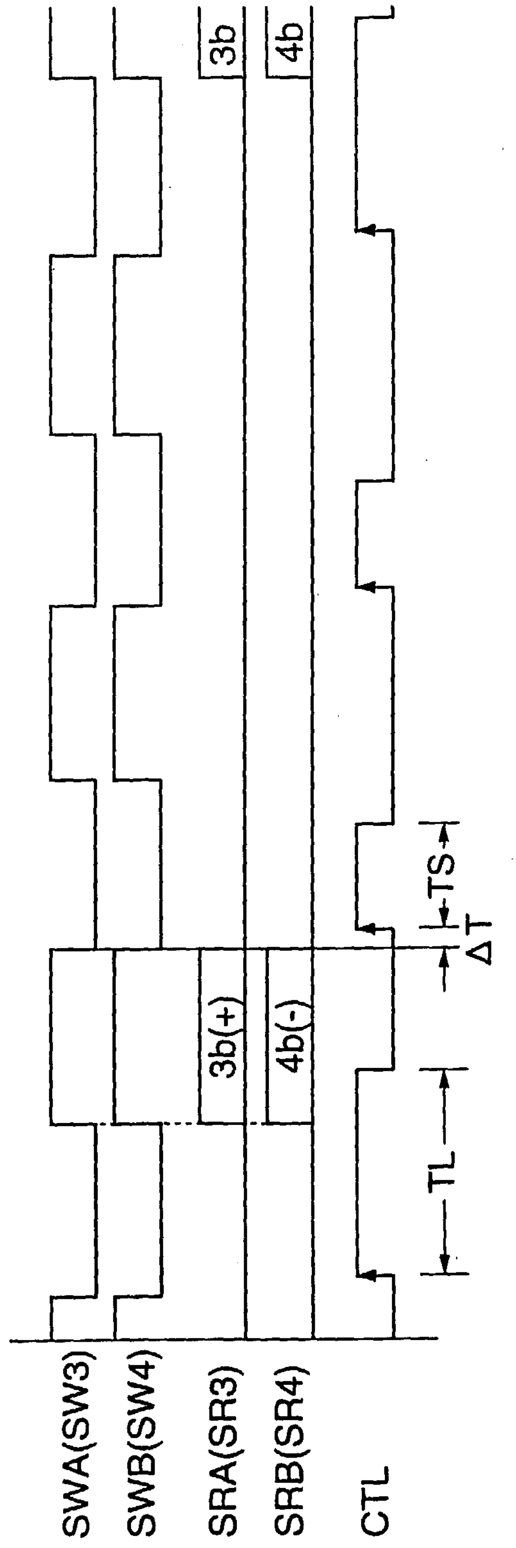


FIG.25C
LP3 MODE

FIG.26

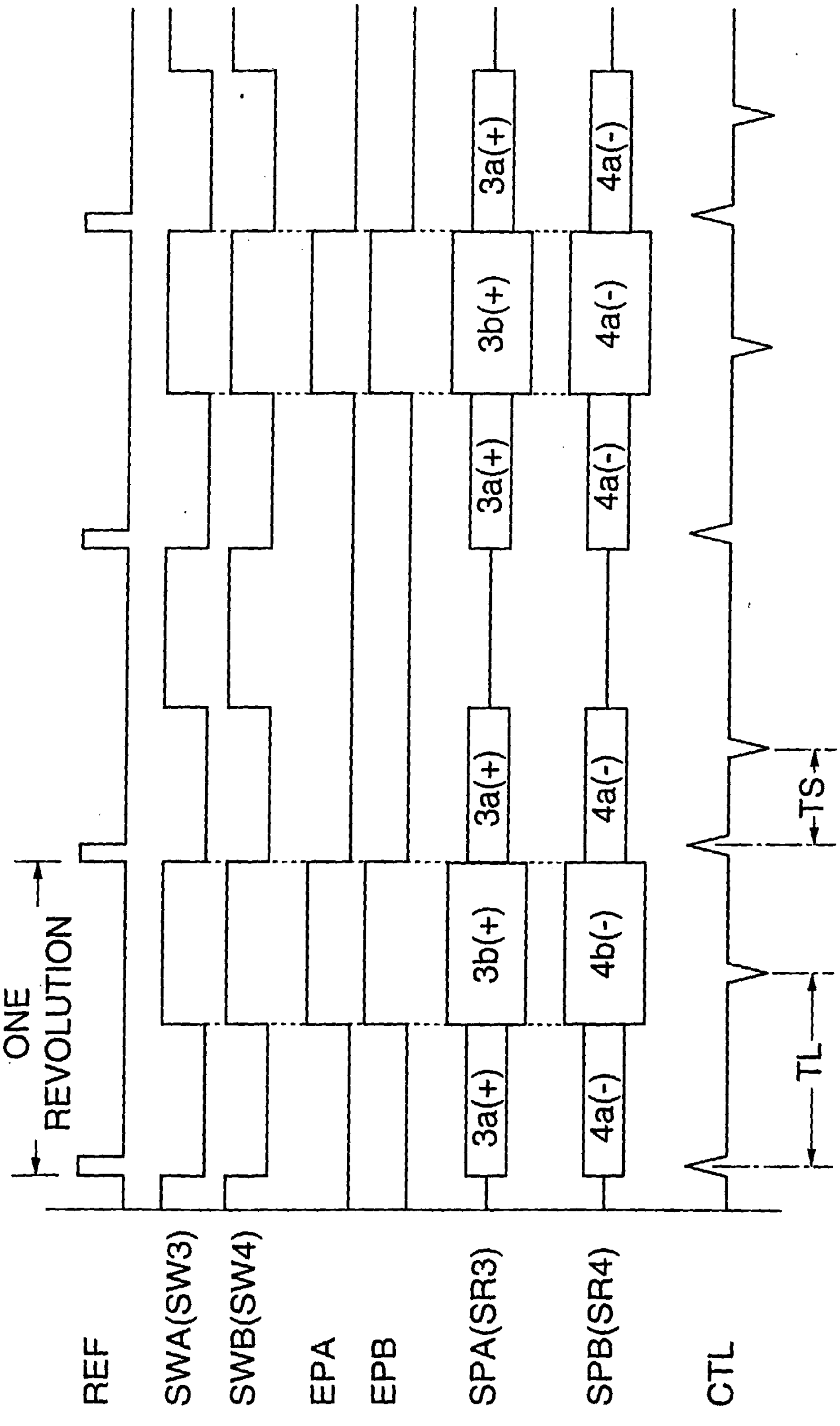
REF
SWA(SW3)
SWB(SW4)
EPA
EPB
SPA(SR3)
SPB(SR4)
CTL
ONE REVOLUTION
3a(+)
3b(+)
3a(+)
3a(+)
3b(+)
3a(+)
4a(-)
4b(-)
4a(-)
4a(-)
4a(-)
4a(-)
TL
TS